# EUROPÄISCHE PATENTSCHRIFT

(11) **EP 4 331 107 B1**
(45) Veröffentlichungstag und Bekanntmachung des Hinweises auf die Patenterteilung: **24.06.2026**
(21) Anmeldenummer: 22725719.3
(22) Anmeldetag: 25.04.2022
(51) Int. Cl.: H02P 13/06

(54) **LASTSTUFENSCHALTERMODUL, ANORDNUNG AUS LASTSTUFENSCHALTERMODUL UND LEISTUNGSTRANSFORMATOR UND VERFAHREN ZUM BETRIEB EINES LASTSTUFENSCHALTERMODULS**
ON-LOAD TAP-CHANGER MODULE, ARRANGEMENT COMPOSED OF AN ON-LOAD TAP-CHANGER MODULE AND POWER TRANSFORMER, AND METHOD FOR OPERATING AN ON-LOAD TAP-CHANGER MODULE
MODULE CHANGEUR DE PRISES EN CHARGE, ENSEMBLE COMPOSÉ D'UN MODULE DE CHANGEUR DE PRISES EN CHARGE ET D'UN TRANSFORMATEUR DE PUISSANCE ET PROCÉDÉ POUR FAIRE FONCTIONNER UN MODULE DE CHANGEUR DE PRISES EN CHARGE

(30) Priorität: 30.04.2021 DE 102021111181
(43) Veröffentlichungstag der Anmeldung: 06.03.2024
(73) Patentinhaber: Infineon Technologies Bipolar GmbH & Co. KG, 59581 Warstein (DE); Siemens Gamesa Renewable Energy Innovation & Technology S.L., 31621 Sarriguren (Navarra) (ES)
(72) Erfinder: SCHIELE, Jürgen, 52499 Bäsweiler (DE); BARRENETXEA INARRA, Manex, 20500 Arrasate (ES); CANALES SEGADE, Jose Maria, 48200 Durango (ES); PRZYBILLA, Nils, 59581 Warstein (DE); RODRIGUEZ VAZQUEZ, Miguel, 31620 Gorraiz (ES); SANTODOMINGO, Fernando, 35009 Las Palmas de Gran Canaria (ES)
(74) Vertreter: Westphal, Mussgnug & Partner, Patentanwälte mbB
(86) Internationale Anmeldenummer: PCT/EP2022/060828
(87) Internationale Veröffentlichungsnummer: WO 2022/229056

(56) Entgegenhaltungen:
- EP-A1- 3 316 070
- EP-A1- 3 499 670
- EP-A1- 3 742 251
- EP-A1- 3 780 038
- DE OLIVEIRA QUEVEDO JOSEMAR ET AL: "Analysis and Design of an Electronic On-Load Tap Changer Distribution Transformer for Automatic Voltage Regulation", IEEE TRANSACTIONS ON INDUSTRIAL ELECTRONICS, IEEE SERVICE CENTER, PISCATAWAY, NJ, USA, vol. 64, no. 1, 1 January 2017 (2017-01-01), pages 883 - 894, XP011636238, ISSN: 0278-0046, [retrieved on 20161209], DOI: 10.1109/TIE.2016.2592463

## Beschreibung

Das Dokument "Analysis and Design of an Electronic On-Load Tap Changer Distribution Transformer for Automatic Voltage Regulation" veröffentlicht von De Oliveira Quevedo Josemar et. Al in IEEE Transactions on Industrial Electronics, IEEE Service Center, Piscataway, NJ, USA, Bd. 64, Nr. 1, 1. Januar 2017 offenbart eine Analyse sowie Design Richtlinien für einen elektronischen OLTC (Laststufenschalter) der auf der Primärseite eines Verteilertransformators angeordnet ist.

Die Druckschrift EP 3 780 038 A1 offenbart einen Laststufenschalter auf Basis von Halbleiterschaltern für Anwendungen, die eine dynamische Spannungsregelung erfordern. Der Stufenschalter ist mit einer zentralen Steuereinheit ausgestattet, die den optimalen Betriebssollwert in Abhängigkeit von den Informationen ermittelt, die von den den einzelnen Phasen zugeordneten lokalen Steuereinheiten geliefert werden. Zu diesem Zweck sind die lokalen Steuereinheiten mit einer Reihe von Spannungs- und Stromsensoren verknüpft, die den Betriebszustand des Stufenschalters ermitteln. Darüber hinaus aktivieren diese lokalen Steuereinheiten die Steuersignale der Halbleiterschalter, um den vom zentralen Controller festgelegten optimalen Abgriff auszuwählen.

Die vorliegende Erfindung betrifft ein Laststufenschaltermodul, insbesondere leistungselektronisches Laststufenschaltermodul, zur Einstellung eines Übersetzungsverhältnisses eines Leistungstransformators mit wenigstens einer, wenigstens eine Anzapfung bereitstellenden Transformatorwicklung. Die Erfindung betrifft ferner eine Anordnung aus einem Leistungstransformator mit wenigstens einer, wenigstens eine Anzapfung bereitstellenden Transformatorwicklung und einem Laststufenschaltermodul zur Einstellung eines Übersetzungsverhältnisses des Leistungstransformators. Außerdem betrifft die Erfindung ein Verfahren zum Betrieb eines Laststufenschaltermoduls.

Stufenschalter für Leistungstransformatoren dienen in an sich bekannter Weise zur Einstellung des Transformatorübersetzungsverhältnisses. Die Wicklung des Transformators kann auf seiner Ober- oder Unterspannungsseite zum Beispiel eine Stammwicklung und eine Regel- oder Stufenwicklung mit einer oder mehreren Anzapfungen (hierin ebenso als Wicklungsabgriff oder kurz als Abgriff bezeichnet) aufweisen, die an den Stufenschalter geführt wird/werden.

Laststufenschalter dienen zur unterbrechungsfreien Umschaltung des Übersetzungsverhältnisses unter Last. Zur Spannungsregelung wird das Übersetzungsverhältnis durch Ein- und Ausschalten der Stufenwicklung bzw. von durch die Anzapfungen bzw. Abgriffe definierten Wicklungsabschnitten der Stufenwicklung eingestellt. Hierzu können in der Leistungselektronik elektronische Ventile oder Schalter verwendet werden. Elektronische Ventile bzw. Schalter sind Funktionselemente, die abwechselnd in den leitenden und nichtleitenden Zustand versetzt werden können.

In Systemen, z. B. Windkraftanlagen, in denen Transformatoren oder Spartransformatoren eingesetzt werden, die an Hochspannungs- (größer 69 kV), Mittelspannungs- (zwischen 1 kV und 69 kV) oder selbst Niederspannungsnetzen (unterhalb von 1 kV) angeschlossen sind, tritt häufig das Problem von Spannungsinstabilitäten auf. Solche Instabilitäten können sich in Stromerzeugungsanlagen, die an ein Stromnetz angeschlossen sind und die Netzanforderungen erfüllen müssen, verschlimmern. Die Spannung kann hierbei durchaus zwischen etwa -20 % bis +20 % der Nennspannung schwanken. Das führt zu einer Überdimensionierung des gesamten Systems und zu weniger effizienten Betriebsbedingungen. Um dieses Problem zu lösen und kosteneffizient zu sein, ist es bekannt, diese Anlagen mit Stufenschaltern auszustatten. Diese werden üblicherweise mit mechanischen Schaltern realisiert, die gewöhnlich in den Transformator integriert sind. Ein Nachteil der Verwendung solcher mechanischen Schalter ist, dass mechanische Stufenschalter langsam sind und daher nicht auf schnelle Spannungsabfälle und/oder Überspannungen reagieren können.

Eine alternative Lösung ist der thyristorbasierte Stufenschalter. Thyristoren sind schnelle und wartungsfreie Schalter, die eine schnelle Reaktion auf schnelle Spannungseinbrüche und/oder Überspannungen ermöglichen. In manchen Situationen können die Thyristoren jedoch ausfallen, was zur Zerstörung des Transformators führt. Darüber hinaus können undefinierte Schaltzustände solcher Thyristoren beispielsweise beim Anfahren oder Hochfahren der Anlage/des Systems dazu führen, dass zwischen den Abgriffen/Anzapfungen der Transformatorwicklung Spannungen anliegen, die die Höhe der Speisespannung erreichen oder sogar überschreiten. Dies kann zu unerwünschten Folgen wie dem Totalausfall der Anlage/des Systems führen oder im schlimmsten Fall können die thyristorbasierten Stufenschalter unter solchen Betriebsbedingungen zerstört werden.

Vor diesem Hintergrund liegt der vorliegenden Erfindung die Aufgabe zugrunde, ein Laststufenschaltermodul, insbesondere leistungselektronisches Laststufenschaltermodul, zur Einstellung eines Übersetzungsverhältnisses eines Leistungs- oder Spartransformators, eine Anordnung aus einem Leistungs- oder Spartransformator und einem Laststufenschaltermodul sowie ein Verfahren zum Betrieb eines Laststufenschaltermoduls bereitzustellen, die einen zuverlässigen, sicheren, wartungsarmen, langlebigen Betrieb elektrischer Anlagen/Systeme, z. B. Windkraftanlagen, gewährleisten. Das Laststufenschaltermodul soll ebenso einen Schutz bei transienten Hochspannungs- bzw. Stoßspannungsereignissen bereitstellen können. Zudem soll das Laststufenschaltermodul einfach bauen und beispielsweise auch bereits bestehenden elektrischen Anlagen/Systemen nachträglich ohne großen Aufwand bereitstellbar sein.

Diese Aufgabe wird durch ein Laststufenschaltermodul mit den Merkmalen des Anspruchs 1, durch eine Anordnung aus einem Leistungs- oder Spartransformator und einem Laststufenschaltermodul mit den Merkmalen des Anspruchs 16 sowie durch ein Verfahren zum Betrieb eines Laststufenschaltermoduls mit den Merkmalen des Anspruchs 19 gelöst. Weitere vorteilhafte Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Außerdem soll ein hierin verwendeter Begriff "etwa" einen Toleranzbereich angeben, den der auf dem vorliegenden Gebiet tätige Fachmann als üblich ansieht. Insbesondere ist unter dem Begriff "etwa" ein Toleranzbereich der bezogenen Größe von bis maximal +/-20 %, bevorzugt bis maximal +/-10 % zu verstehen.

Erfindungsgemäß weist ein Laststufenschaltermodul (auch als *on-load tap changer* oder OLTC bezeichnet) zur Einstellung eines Übersetzungsverhältnisses eines Leistungstransformators mit wenigstens zwei, jeweils wenigstens eine Abzapfung bereitstellende Transformatorwicklungen eine Steuereinrichtung (z. B. eine elektronische Steuereinrichtung wie Rechen- und Speichereinheit, beispielsweise Mikroprozessor, Mikrocontroller und dergleichen ggfs. in Verbindung mit RAM-, ROM-, Flash-Speicher etc.), wenigstens drei mittels der Steuereinrichtung zur Einstellung des Übersetzungsverhältnisses des Leistungstransformators wahlweise ein- und ausschaltbare Stufenschalter, die über einen ersten elektrischen Anschluss untereinander verbunden sind und die über einen wicklungsseitigen, zweiten elektrischen Anschluss jeweils mit einer anderen der Anzapfungen verbunden sind, und wenigstens eine Klemmschaltung zur Spannungsbegrenzung auf, die eingerichtet ist, bei Überschreiten eines vorbestimmten Spannungsschwellenwerts einen vorbestimmten Strompfad zur Bestimmung eines vorbestimmten Übersetzungsverhältnisses des Leistungstransformators bereitzustellen, wobei die Klemmschaltung an einem Ende mit einer Anzapfung einer der Transformatorwicklungen und an einem anderen Ende mit einer Anzapfung einer anderen der Transformatorwicklungen verbunden ist.

Die Klemmschaltung (engl. *Crowbar*) ist eine elektrische und/oder elektronische Schaltung, die als Schutz vor Überspannung dient und bei Erreichen des vorbestimmten Spannungsschwellenwerts, z. B. etwa 7 kV, an Anschlüssen der Klemmschaltung diese anliegende Spannung kurzschließt.

Als Leistungstransformator kann im Sinne der Erfindung ein elektrischer Transformator verstanden werden, der für Leistungen im Bereich von beispielsweise etwa 1 MVA bis etwa 100 MVA ausgelegt ist. Hierzu sollen insbesondere Geräte in elektrischen Energienetzen/Energiesystemen zählen, die häufig als ein- oder mehrphasiger, z. B. dreiphasiger, Wechselstromtransformator oder auch als Spartransformator ausgeführt sein können.

Eine Kippdiodenstruktur (auch als Shockley-Diode bezeichnet und hierin der Einfachheit halber ebenso kurz als Kippdiode) kann als eine Vierschichtdiodenstruktur aufgefasst werden, das heißt ein Silizium-Halbleiterbauteil mit vier unterschiedlich dotierten Halbleiterzonen und drei pn-Übergängen. Bei Überschreiten einer bestimmten Spannung entsprechender Polarität an den Diodenanschlüssen (d. h. Anode und Kathode) kippt die Diodenstruktur in einen niederohmigen, leitenden Zustand (*breakover*)*.* Dieser Zustand besteht so lange, bis ein bestimmter Haltestrom unterschritten wird. Danach kippt die Diodenstruktur wieder in den hochohmigen Ausgangszustand.

Die Kippdiodenstruktur kann als Break-Over-Diodenstruktur (auch als BOD-Struktur bezeichnet) ausgebildet sein.

Der Begriff "Klemmschaltung" ist als eine Vorrichtung zu verstehen, die aus einem einzelnen oder mehreren einzelnen Elementen besteht, die so eingerichtet und ausgelegt sind, dass sie zwei Punkte eines Transformators elektrisch miteinander verbinden und eine vorgegebene Maximalspannung dazwischen einstellen. Die Klemmschaltung kann so eingerichtet und ausgelegt sein, dass sie z. B. dann aktiviert wird, wenn zumindest das Steuersystem bzw. die Steuereinrichtung des Transformators nicht mit Strom versorgt wird oder wenn unter normalen Betriebsbedingungen ein Fehler auftritt.

Der Begriff "mechanische Klemmvorrichtung" ist hier als eine Vorrichtung zu verstehen, die so eingerichtet und ausgelegt ist, dass sie mechanischen Druck auf ein elektronisches Bauelement, wie z. B. einen Thyristor, oder auf eine Vielzahl hiervon ausübt, um dessen/deren korrekten Betrieb zu ermöglichen.

Unter dem Begriff "Kaltstart" wird hierin ein Zustand verstanden, in dem der Transformator/Stufenschalter oder zumindest das Steuersystem/die Steuereinrichtung des Stufenschalters keine elektrische Versorgung hat. In diesem Zustand kann das Übersetzungsverhältnis des Transformators nicht durch die Steuereinrichtung eingestellt werden, es kann jedoch durch die Klemmschaltung definiert eingestellt werden.

Unter dem Begriff "Hochfahren/Anfahren" soll hierin ein Transformatorzustand bzw. -vorgang verstanden werden, bei dem die Klemmschaltung aktiviert bzw. kurzgeschlossen wird, d. h. wenn zumindest die Steuereinrichtung keine elektrische Versorgung hat (Kaltstart-Situation). Während des Anlaufs verbindet die Klemmschaltung zwei Punkte des Stufenschalters und schließt damit einen Stromkreis, durch den das Stufenschaltermodul und der gesamte Transformator/das System z. B. bis zur ordnungsgemäßen Steuerung unter Spannung gesetzt wird.

Der Begriff "Autostart" soll hierin als die Fähigkeit oder der Vorgang eines Systems interpretiert werden, sich selbst einzuschalten, wenn das Steuersystem/die Steuereinrichtung nicht in der Lage ist, das System zu steuern, z. B. aufgrund fehlender Stromversorgung oder während der Erholungszeit nach der Wiederherstellung der Stromversorgung (normalerweise braucht das Steuersystem eine gewisse Zeit, um zu laden und vollständig betriebsbereit zu sein). Das heißt, durch den Autostart kann dem System, d. h. dem Stufenschalter, ein vordefinierter Zustand gegeben werden, in dem er arbeiten kann bzw. laufen darf, während das Steuersystem dazu nicht in der Lage ist und bis das Steuersystem die ordnungsgemäße Betriebssteuerung wiederherstellt.

Die Begriffe "Transformator" und "Spartransformator" werden hierin austauschbar verwendet.

Das Laststufenschaltermodul gemäß der Erfindung kann an die bei der jeweiligen Anwendung auftretenden elektrischen Spannungen entsprechend angepasst werden, ab welcher die Klemmschaltung die miteinander verbundenen Anzapfungen im Sinne der gewünschten Spannungsbegrenzung kurzschließen soll.

Auf diese Weise stellt das erfindungsgemäße Laststufenschaltermodul sicher, dass die Klemmschaltung bei einer definierten Überspannung zwischen ihren jeweiligen Anschlüssen aktiviert wird und das System unter sicheren Bedingungen laufen kann. Eine Überspannung kann beispielsweise auftreten, wenn sich die steuerbaren Stufenschalter in einem undefinierten Schaltzustand befinden, beispielsweise beim Hochfahren oder bei (kurzzeitigen) Spannungsausfällen/- unterbrechungen des Systems, wenn die Steuereinrichtung nicht ordnungsgemäß mit Strom versorgt wird und dementsprechend eine ordnungsgemäße Steuerung der Stufenschalter durch die Steuereinrichtung (noch) nicht gewährleistet ist. Sobald keine Überspannung mehr zwischen den Abgriffen/Anzapfungen anliegt, zum Beispiel weil die Steuereinrichtung die Steuerung der Stufenschalter ordnungsgemäß übernommen hat, kehrt die Klemmschaltung in ihren hochohmigen Ausgangszustand zurück, in dem im Wesentlichen keine leitende elektrische Verbindung zwischen ihren Anschlüssen besteht. In diesem Zustand beeinflusst bzw. stört die Klemmschaltung den normalen Betrieb des Systems nicht. Damit verleiht das erfindungsgemäße Laststufenschaltermodul der elektrischen Anlage/System (z. B. einem Transformator oder Spartransformator) eine zuverlässige Autostartfähigkeit.

Auch in dem Fall eines gestörten Betriebs eines oder mehrerer der Stufenschalter oder des Laststufenschaltermoduls gewährleistet die Klemmschaltung einen sicheren Betrieb in der vorbeschriebenen Weise. Nach der Beseitigung der Schalterstörung setzt die Klemmschaltung wieder ihren normalen Betrieb fort, d. h. in welchem sie den normalen Betrieb des Systems nicht stört bzw. nachteilig beeinflusst.

Selbst wenn die Klemmschaltung beschädigt werden sollte, zum Beispiel in Form eines Kurzschlusses zwischen ihren Anschlüssen, bleibt ein sicherer Betrieb des gesamten Systems dennoch gewährleistet, da die über die Klemmschaltung miteinander verbundenen Transformatorabgriffe/-anzapfungen dementsprechend ebenfalls kurzgeschlossen sind und solange kurzgeschlossen bleiben, bis die Störung der Klemmschaltung beseitigt bzw. diese gegen eine funktionstüchtige ausgetauscht ist.

Das erfindungsgemäße Laststufenschaltermodul gewährleistet einen zuverlässigen und sicheren Betrieb elektrischer Anlagen/Systeme, zum Beispiel Nieder-, Mittel- oder Hochspannungsanlagen/-systeme. Da die Klemmschaltung automatisch, d. h. ohne externe Ansteuerung, zwischen ihrem hochohmigen Ausgangszustand und ihrem niederohmigen, leitenden Zustand wechselt, ist das Laststufenschaltermodul zudem besonders wartungsarm, beispielsweise bei Vorsehen einer Kipp- bzw. Break-Over-Diodenstruktur in der Klemmschaltung, wobei die Break-Over-Diodenstruktur vorteilhaft z. B. durch einen Thyristor, insbesondere lichtgesteuerten Thyristor (LTT), bereitgestellt sein kann, ohne jedoch zwingend hierauf beschränkt zu sein. Das Laststufenschaltermodul gewährleistet auch bei transienten, schnellen Hochspannungs- bzw. Stoßspannungsereignissen am Leistungstransformator einen sicheren Betrieb des gesamten Systems. Zudem kann ein sicherer Betrieb ebenfalls beim Auftreten interner Stör- oder Fehlerereignisse sowie während des Hochfahrens bzw. Systemstarts sichergestellt werden. Selbst bereits existierende Anlagen/Systeme können auf einfache Weise mit dem erfindungsgemäßen Laststufenschaltermodul nachgerüstet und damit sicherheitstechnisch verbessert werden.

Die Klemmschaltung kann nach einer weiteren Ausführung wenigstens einen Thyristor aufweisen.

Weiterhin kann die Klemmschaltung nach einer weiteren Ausführung wenigstens eine Kippdiodenstruktur mit einer vorbestimmten Durchbruchspannung aufweisen. Die Kippdiodenstruktur kann beispielsweise durch einen Thyristor bereitgestellt sein, ohne jedoch zwingend hierauf beschränkt zu sein.

Die Kippdiodenstruktur kann beispielsweise wicklungsseitige Anschlüsse der Stufenschalter miteinander elektrisch verbinden.

Nach einer noch weiteren vorteilhaften Ausgestaltung kann die Klemmschaltung ein Paar antiparallel geschalteter Kippdiodenstrukturen mit jeweils einer vorbestimmten Durchbruchspannung aufweisen. Die vorbestimmten Durchbruchspannungen der Kippdiodenstrukturen können im Wesentlichen identisch sein. Sie können jedoch auch verschieden sein, um unterschiedliche Betriebszustände des elektrischen Systems adäquat berücksichtigen zu können.

Gemäß einer vorteilhaften Ausgestaltung der Erfindung weist der wenigstens eine Stufenschalter zwischen seinen Anschlüssen ein Paar antiparallel geschalteter, von der Steuereinrichtung steuerbare Leistungshalbleiterschalter auf.

Beispielsweise kann der Leistungshalbleiterschalter in vorteilhafter Weise als von der Steuereinrichtung in an sich bekannter Weise steuerbarer Thyristor ausgebildet sein. Das thyristorbasierte Laststufenschaltermodul zeichnet sich durch einen langlebigen, wartungsarmen bzw. wartungsfreien Betrieb aus. Zudem erlaubt der Thyristor ein schnelles und energieeffizientes Schalten des Stufenschalters und verbessert somit die Reaktionsfähigkeit des Laststufenschaltermoduls sowie den Gesamtwirkungsgrad der betriebenen elektrischen Anlage. Das Laststufenschaltermodul kann auch auf schnelle hochspannungsintensive Ereignisse (z. B. transiente Stoßspannungen) ohne externe Steuerung angemessen reagieren, um Schäden an sich selbst und dem angeschlossenen System zu verhindern.

Nach einer weiteren bevorzugten Ausgestaltung der Erfindung ist der Thyristor ein lichtgesteuerter Thyristor (auch als LTT bezeichnet). Der Vorteil eines optischen Steuersignals gegenüber einem elektrischen Steuersignal liegt unter anderem in einem besseren EMV-Schutz, da eine optische Zuleitung des Steuersignals zu einer lichtempfindlichen Zündstruktur des Thyristors (zum Beispiel über Glasfaser) im Vergleich zu einer elektrischen Zuleitung unempfindlich ist gegenüber einer Fehlzündung durch sehr hohe elektrische und magnetische Felder, hervorgerufen durch sehr hohe Strom- und Spannungsänderungen im Umfeld des Laststufenschaltermoduls. Weiterhin bietet ein optisches Steuersignal Vorteile bei hohen am Laststufenschaltermodul anliegenden Potentialunterschieden (Isolation gegenüber sehr hohen Spannungsunterschieden im 1 kV bis 100 kV-Bereich).

Eine noch weitere vorteilhafte Ausgestaltung der Erfindung sieht vor, dass die Steuereinrichtung ausschließlich aus der vom Leistungstransformator zu transformierenden bzw. diesem zugeführten oder entnehmbaren elektrischen Spannung (z. B. Mittel-/Hochspannung) gespeist ist. Mit anderen Worten kann auf eine Hilfsstromquelle zur zusätzlichen, von der dem Transformator zugeführten elektrischen Energie unabhängigen Energieversorgung der Steuereinrichtung verzichtet werden (d. h. Kostenersparnis sowie einfacherer, kompakterer und wartungsfreier Aufbau). Die Autostartfähigkeit des Laststufenschaltermoduls ist in jedem Fall auch ohne eigene Stromversorgung der Steuereinrichtung bzw. des Laststufenschaltermoduls gewährleistet, wie hierin ausführlich erläutert ist.

Nach einer anderen vorteilhaften Weiterbildung des Erfindungsgegenstands ist die Kippdiodenstruktur als Thyristor mit einer Break-Over-Diodenstruktur (BOD) ausgebildet. Der Thyristor kann z. B. ein elektrisch steuerbarer oder ein lichtsteuerbarer Thyristor sein. In diesem Fall muss die elektrische oder die lichtbasierte Steuerung des Thyristors für die Erfindung nicht zwingend verwendet werden, da bereits lediglich die in ihm integrierte Kippdiodenstruktur bzw. BOD die erfindungsgemäße Funktion bereitstellen kann.

Die Ausbildung der Kippdiodenstruktur bzw. der Klemmschaltung als Thyristor bzw. Thyristoren bietet bei gleichzeitiger Ausbildung der Stufenschalter ebenfalls als Thyristoren zudem besondere mechanische Vorteile. Insbesondere lassen sich in diesem Fall die die Leistungshalbleiterschalter bildenden Thyristoren und der bzw. die die Kippdiodenstruktur bildende/n Thyristor/en in einem gemeinsamen Thyristorstapel gestapelt, insbesondere übereinandergestapelt, und beispielsweise druckkontaktiert anordnen, wodurch sich ein modularer und insbesondere kompakter Aufbau des Laststufenschaltermoduls realisieren lässt. Der als Pressstapel ausgebildete modulartige Thyristorstapel lässt sich zudem ohne großen Aufwand auch in bereits bestehende Anlagen gegen einen bereits verwendeten herkömmlichen Thyristorstapel, der keine Klemmschaltung im Sinne der Erfindung aufweist, austauschen.

Nach einer besonders bevorzugten Ausgestaltung der Erfindung ist der Leistungstransformator ein Hochspannungstransformator, das heißt ein Transformator, der eingerichtet ist, elektrische Spannungen größer als 1 kV zu transformieren, z. B. Mittelhochspannungen im Bereich von etwa 1 kV bis 50 kV oder etwa 1 kV bis 60 kV oder auch Hochspannungen oberhalb von 60 kV.

Gemäß einem weiteren Aspekt der Erfindung ist eine Anordnung aus einem Leistungstransformator mit wenigstens einer, wenigstens eine Anzapfung bereitstellenden Transformatorwicklung und einem Laststufenschaltermodul nach einer der hierin offenbarten Ausgestaltungen zur Einstellung eines Übersetzungsverhältnisses des Leistungstransformators offenbart. Hierbei sind wicklungsseitige elektrische Anschlüsse des bzw. der Stufenschalter mit jeweils einem der Abgriffe bzw. Anzapfungen der Transformatorwicklung verbunden.

Es ist anzumerken, dass bezüglich anordnungsbezogener Begriffsdefinitionen sowie der Wirkungen und Vorteile anordnungsgemäßer Merkmale vollumfänglich auf die Offenbarungen sinngemäßer Definitionen, Wirkungen und Vorteile des hierin offenbarten erfindungsgemäßen Laststufenschaltermoduls Bezug genommen wird. Das heißt, Offenbarungen hierin bezüglich des erfindungsgemäßen Laststufenschaltermoduls können in sinngemäßer Weise ebenso zur Definition der erfindungsgemäßen Anordnung herangezogen werden, sofern dies nicht ausdrücklich ausgeschlossen ist. Ebenfalls können Offenbarungen hierin bezüglich der erfindungsgemäßen Anordnung in sinngemäßer Weise zur Definition des erfindungsgemäßen Laststufenschaltermoduls herangezogen werden, sofern dies nicht ausdrücklich ausgeschlossen ist. Insofern kann auf eine Wiederholung von Erläuterungen sinngemäß gleicher Merkmale, deren Wirkungen und Vorteile zugunsten einer kompakteren Beschreibung verzichtet werden, ohne dass derartige Auslassungen als Einschränkung auszulegen wären.

Gemäß einem weiteren Aspekt der Erfindung ist ebenfalls eine Windkraftanlage mit einem Laststufenschaltermodul nach einer der hierin offenbarten Ausführungen offenbart.

Gemäß einem noch weiteren Aspekt der Erfindung weist ein Verfahren zum Betrieb eines Laststufenschaltermoduls, insbesondere eines wie hierin offenbarten Laststufenschaltermoduls, die Schritte auf:
- Bereitstellen einer Steuereinrichtung,
- Bereitstellen eines Leistungstransformators mit wenigstens einer, wenigstens eine Anzapfung bereitstellenden Transformatorwicklung,
- Bereitstellen wenigstens eines mittels der Steuereinrichtung zur Einstellung eines Übersetzungsverhältnisses des Leistungstransformators wahlweise ein- und ausschaltbaren Stufenschalters,
- Bereitstellen wenigstens einer Klemmschaltung zur Spannungsbegrenzung, und
- Bereitstellen eines vorbestimmten Strompfads mittels der wenigstens einen Klemmschaltung bei Überschreiten eines vorbestimmten Spannungsschwellenwerts, um ein vorbestimmtes Übersetzungsverhältnis des Leistungstransformators zu bestimmen.

Auch hinsichtlich des offenbarten Verfahrens gemäß der Erfindung sei angemerkt, dass bezüglich verfahrensbezogener Begriffsdefinitionen sowie der Wirkungen und Vorteile verfahrensgemäßer Merkmale vollumfänglich auf die Offenbarungen sinngemäßer Definitionen, Wirkungen und Vorteile des hierin offenbarten erfindungsgemäßen Laststufenschaltermoduls Bezug genommen wird und Offenbarungen hierin bezüglich des erfindungsgemäßen Laststufenschaltermoduls sowie des erfindungsgemäßen Verfahrens in sinngemäßer Weise wechselweise zur Definition der erfindungsgemäßen Vorrichtung bzw. des Laststufenschaltermoduls herangezogen werden können, sofern dies nicht ausdrücklich ausgeschlossen ist. Insofern kann auf eine Wiederholung von Erläuterungen sinngemäß gleicher Merkmale, deren Wirkungen und Vorteile zugunsten einer kompakteren Beschreibung verzichtet werden, ohne dass derartige Auslassungen als Einschränkung auszulegen wären.

Der Leistungstransformator kann vorzugsweise ein Hochspannungstransformator, wie hierin an anderer Stelle ausführlich erläutert, sein, ohne jedoch zwingend hierauf beschränkt zu sein.

Weiterhin bevorzugt kann der wenigstens eine Stufenschalter nach einer Ausgestaltung zwischen seinen Anschlüssen ein Paar antiparallel geschalteter, von der Steuereinrichtung steuerbare Leistungshalbleiterschalter, zum Beispiel in Form eines Thyristors (z. B. ein lichtgesteuerter Thyristor), aufweisen, ohne jedoch zwingend hierauf beschränkt zu sein.

Weiterhin kann nach einer Ausführung die Klemmschaltung mit wenigstens einer Kippdiodenstruktur mit einer vorbestimmten Durchbruchspannung bereitgestellt werden.

Nach einer bevorzugten Ausführung kann die Klemmschaltung mit einem Paar antiparallel geschalteter Kippdiodenstrukturen mit jeweils einer vorbestimmten Durchbruchspannung bereitgestellt werden.

Die Kippdiodenstruktur kann ebenfalls als Thyristor (z. B. LTT) mit einer Break-Over-Diodenstruktur (BOD) ausgebildet sein.

Die Thyristoren der Stufenschalter und/oder der Klemmschaltung können bevorzugt in einem Thyristorstapel (auch als Presspack bezeichnet) gestapelt, insbesondere übereinandergestapelt, angeordnet werden, um besondere mechanische und bauliche Vorteile zu erzielen, wie hierin ausführlich im Zusammenhang mit dem erfindungsgemäßen Laststufenschaltermodul erläutert ist.

Nach einer besonders vorteilhaften Ausgestaltung der Erfindung wird die Steuereinrichtung ausschließlich aus der vom Leistungstransformator zu transformierenden bzw. diesem zugeführten oder entnehmbaren elektrischen Spannung gespeist. Das heißt, die Steuereinrichtung benötigt keine separate, zusätzliche Stromversorgung, sondern speist sich allein aus der elektrischen Energie der Anlage/des Systems (z. B. eine Windkraft- oder Photovoltaikanlage und dergleichen), der das erfindungsgemäße Laststufenschaltermodul betriebsmäßig zugeordnet ist. Obwohl das Laststufenschaltermodul keine eigene Hilfsenergieversorgung erfordert, gewährleistet es einen sicheren, kontrollierten und robusten Anlauf (d. h. Autostart) der Energieanlage trotz der zum Zeitpunkt des Autostarts (noch) fehlenden Hochspannung.

Durch die Verwendung einer Klemmschaltung gemäß einer der hierin offenbarten Ausführungsformen kann das Laststufenschaltermodul im Falle einer Überspannung gesichert werden. Darüber hinaus kann die Klemmschaltung im Falle einer fehlenden Spannungsversorgung der Steuereinrichtung den Hoch-/Anlaufprozess des Systems definiert steuern und einen definierten temporären Betrieb des Stufenschaltermoduls gewährleisten, bis die betriebsgemäße Spannungsversorgung der Steuereinrichtung (wieder) hergestellt ist.

Darüber hinaus kann durch die Bereitstellung eines vorbestimmten Strompfades über die Klemmschaltung zur Umgehung einer oder mehrerer vorbestimmter Transformator-Stufenwicklungen ein zufälliges Schalten von Stufenschalterschaltern vermieden werden, was eine schnellere Steuerung des Laststufenschaltermoduls ermöglicht, da die Klemmschaltung zu einem vorbestimmten Zeitpunkt und mit vorbestimmten Eigenschaften geschaltet werden kann.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1A: ein Schaltungsdiagramm eines Ausführungsbeispiels eines Laststufenschaltermoduls
- Fig. 1B: ein Schaltungsdiagramm eines weiteren Ausführungsbeispiels eines Laststufenschaltermoduls
- Fig. 2A: ein Schaltungsdiagramm eines noch weiteren Ausführungsbeispiels eines Laststufenschaltermoduls
- Fig. 2B: ein Schaltungsdiagramm eines weiteren Ausführungsbeispiels eines Laststufenschaltermoduls
- Fig. 3A: ein Schaltungsdiagramm eines weiteren Ausführungsbeispiels eines Laststufenschaltermoduls gemäß der Erfindung,
- Fig. 3B: ein Schaltungsdiagramm eines noch weiteren Ausführungsbeispiels eines Laststufenschaltermoduls
- Fig. 4A: ein Schaltungsdiagramm eines noch weiteren Ausführungsbeispiels eines Laststufenschaltermoduls gemäß der Erfindung,
- Fig. 4B: ein Schaltungsdiagramm eines weiteren Ausführungsbeispiels eines Laststufenschaltermoduls
- Fig. 5: ein Schaltungsdiagramm eines weiteren Ausführungsbeispiels eines Laststufenschaltermoduls zur Einstellung eines Übersetzungsverhältnisses eines Leistungstransformators gemäß der Erfindung,
- Fig. 6: eine detailliertere Ansicht des Laststufenschaltermoduls aus Fig. 5,
- Fig. 7: ein noch weiteres Ausführungsbeispiel eines Laststufenschaltermoduls zur Einstellung eines Übersetzungsverhältnisses eines Leistungstransformators gemäß der Erfindung und
- Fig. 8: ein Ablaufdiagramm eines Ausführungsbeispiel eines Verfahrens zum Betrieb eines Laststufenschaltermoduls gemäß der Erfindung.

In den unterschiedlichen Figuren sind hinsichtlich ihrer Funktion gleichwertige Teile stets mit denselben Bezugszeichen versehen, so dass diese in der Regel auch nur einmal beschrieben werden.

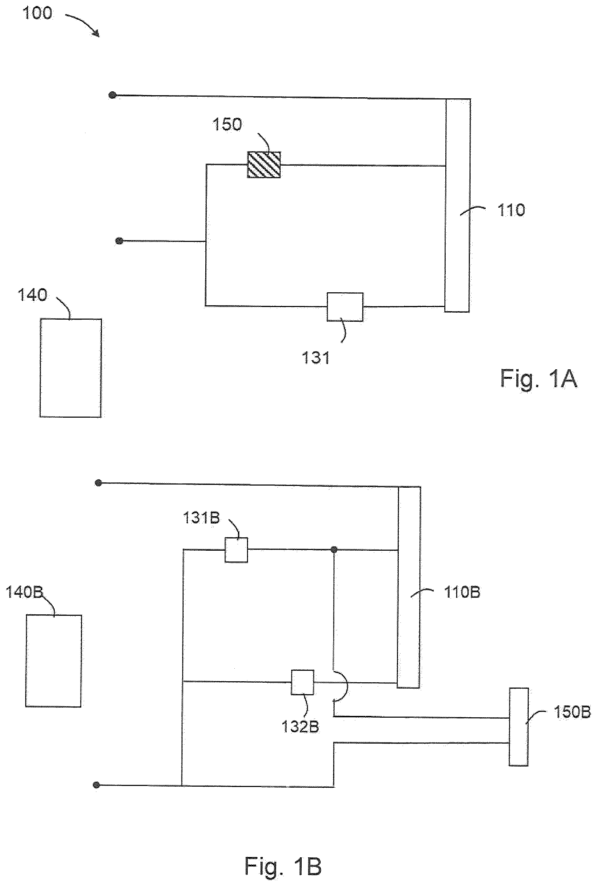

In Fig. 1A ist ein Laststufenschaltermodul 100 gemäß einem Beispiel dargestellt. Das Laststufenschaltermodul 100 kann so eingerichtet und ausgelegt sein, dass es ein Übersetzungsverhältnis eines Leistungstransformators (nicht dargestellt) einstellt, an den es angeschlossen werden kann.

Das Laststufenschaltermodul 100 kann eine erste Transformatorwicklung 110 umfassen, die mindestens eine Anzapfung aufweist, d. h. einen Wicklungsabschnitt oder -teil, der abgeschaltet werden kann, um einen Stromfluss über einen anderen Pfad zu ermöglichen, d. h. alternativ zu dem durch die Wicklungsenden eingestellten Strompfad, und dadurch die Spannung oder das Übersetzungsverhältnis einzustellen.

Das Laststufenschaltermodul 100 kann ein Steuersystem bzw. eine Steuereinrichtung 140, z. B. einen Mikroprozessor, aufweisen, das so eingerichtet sein kann, dass es den Betrieb des Laststufenschaltermoduls z. B. durch Senden von Befehlssignalen steuert. Die Signale können drahtgebunden oder drahtlos übertragen werden und können z. B. optische Signale sein.

Das Laststufenschaltermodul 100 kann mindestens einen Stufenschalter 131 aufweisen (hierin auch als erster Stufenschalter bezeichnet), der so eingerichtet sein kann, dass er durch das Steuersystem 140 wahlweise ein-/ausgeschaltet werden kann, um das Übersetzungsverhältnis des Leistungstransformators einzustellen.

Der mindestens eine (erste) Stufenschalter 131 kann direkt oder indirekt, d. h. über eine Impedanz, mit einem Punkt der Transformatorwicklung verbunden sein. In einigen Beispielen (nicht dargestellt) kann der mindestens erste Stufenschalter 131 zwischen einer Impedanz und der ersten Transformatorwicklung angeordnet sein.

Der Stufenschalter 131 kann einen oder mehrere mechanische oder elektromechanische Schalter umfassen, z. B. Thyristoren, Varistoren oder jedes andere geeignete Element, die parallel oder antiparallel angeordnet sind. Zum Beispiel kann der erste Schalter 131 ein Paar lichtgesteuerte Thyristoren (LLTs) umfassen. Das Paar LLTs kann antiparallel angeordnet bzw. geschaltet sein.

In einem weiteren Beispiel kann der erste Schalter 131 ein Paar elektrisch gesteuerte Thyristoren (ETTs) umfassen. Die EETs können antiparallel angeordnet bzw. geschaltet sein und jeder ETT kann eine Impedanz aufweisen.

Zusätzlich kann das Stufenschaltermodul 100 in Fig. 1A eine Klemmschaltung oder so genannte "crowbar" 150 aufweisen, die so eingerichtet sein kann, dass sie bei Überschreiten einer vorbestimmten Bedingung, wie z. B. einer Schwellenspannung von z. B. etwa 7 kV, einen vordefinierten Strompfad bereitstellt. Wenn also die vorbestimmte Schwellenspannung überschritten wird, kann die Klemmschaltung geschaltet werden, und somit kann die Klemmschaltung ein vordefiniertes Übersetzungsverhältnis bereitstellen.

Dieses vordefinierte Übersetzungsverhältnis kann das Nennübersetzungsverhältnis sein.

Im Falle einer fehlenden Stromversorgung des Steuersystems bzw. der Steuereinrichtung kann die Klemmschaltung das System steuern und den Betrieb des Laststufenschaltermoduls übernehmen, bis die Stromversorgung für das Steuersystem/die Steuereinrichtung wieder hergestellt ist und diese in der Lage ist, das Laststufenschaltermodul ordnungsgemäß zu steuern.

Im Beispiel von Fig. 1A ist die Klemmschaltung 150 innerhalb des Stufenschaltermoduls, d. h. als Teil seiner Struktur, implementiert. Das heißt, die Klemmschaltung 150 kann ein Schalter ähnlich oder gemäß einem der Beispiele des ersten Stufenschalters sein, der jedoch bei Überschreiten eines vorbestimmten Schwellenwerts ein-/ausgeschaltet werden kann und nicht wahlweise durch das Steuersystem bzw. die Steuereinrichtung 140 ein-/ausgeschaltet wird.

In einem Beispiel kann das Laststufenschaltermodul 100 eine mechanische Klemmvorrichtung (nicht dargestellt) aufweisen. Die mechanische Klemmvorrichtung kann so angeordnet sein, dass sie mechanischen Druck auf den ersten Stufenschalter ausübt.

Fig. 1B zeigt ein Laststufenschaltermodul 100B, der eine erste Wicklung 110, ein Steuersystem bzw. Steuereinrichtung 140 und einen ersten Stufenschalter 131B gemäß einem der in Fig. 1A offenbarten Beispiele umfassen kann.

Das Laststufenschaltermodul 100B unterscheidet sich von dem in Fig. 1A dadurch, dass er einen zweiten Stufenschalter 132B aufweisen kann und auch dadurch, dass die Klemmschaltung 150B als separates Element, d. h. als externes, das nicht Teil der (ursprünglichen) Stufenschalterstruktur ist, implementiert sein kann. Die Klemmschaltung 150B kann so angeordnet sein, dass sie einen vordefinierten Strompfad bestimmt, der sich von den durch den ersten und zweiten Stufenschalter definierten Strompfaden unterscheidet.

Die Klemmschaltung 150B kann die gleiche Struktur wie die Klemmschaltung von Fig. 1A aufweisen.

Der zweite Stufenschalter 132B kann jedem der hier offenbarten Beispiele des ersten Stufenschalters entsprechen.

In einem Beispiel kann das Laststufenschaltermodul 100B eine mechanische Klemmvorrichtung (nicht dargestellt) aufweisen. Die mechanische Klemmvorrichtung kann so angeordnet sein, dass sie mechanischen Druck auf den ersten und/oder zweiten Stufenschalter ausübt. In einem Beispiel kann das Laststufenschaltermodul 100B zwei mechanische Klemmvorrichtungen aufweisen, wobei jede mechanische Klemmvorrichtung innerhalb des ersten bzw. zweiten Stufenschalters angeordnet sein kann.

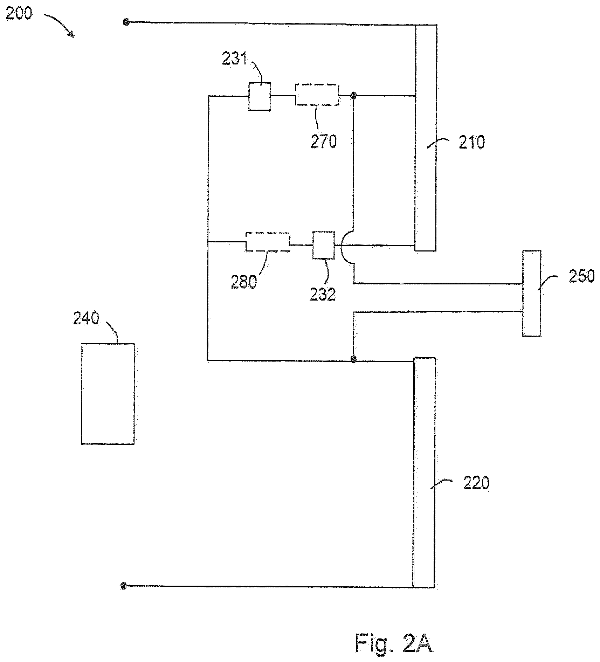

Fig. 2A zeigt ein Laststufenschaltermodul 200 gemäß einem weiteren Beispiel. Das Laststufenschaltermodul 200 kann eine erste Transformatorwicklung 210 und eine zweite Transformatorwicklung 220 oder eine beliebige andere Anzahl von Wicklungen umfassen. Die erste Transformatorwicklung 210 und/oder die zweite Transformatorwicklung 220 können mindestens eine Anzapfung aufweisen.

Das Laststufenschaltermodul 200 kann ferner mindestens zwei Stufenschalter, z. B. einen ersten Stufenschalter 231 und einen zweiten Stufenschalter 232, aufweisen, die wahlweise ein- und ausgeschaltet werden können, z. B. über Steuersignale des Steuersystems bzw. der Steuereinrichtung, um das Übersetzungsverhältnis eines Leistungstransformators einzustellen oder festzulegen. Die Anzahl der Stufenschalter kann von der Anzahl der Transformatorwicklungen und/oder der Anzahl der einzustellenden unterschiedlichen Übersetzungsverhältnisse abhängen. In einigen Beispielen können auch mehr als zwei Stufenschalter verwendet werden.

Die ersten und/oder zweiten Stufenschalter 231, 232 können direkt oder indirekt miteinander verbunden sein, wodurch ein Strompfad definiert wird, durch den Strom fließen kann. Durch Ein- und Ausschalten des ersten und zweiten Stufenschalters 231, 232 kann das Übersetzungsverhältnis eingestellt werden, da unterschiedliche Strompfade zwischen den Transformatorwicklungen eingestellt werden können.

Die ersten und zweiten Stufenschalter 231, 232 können einen oder mehrere mechanische oder elektromechanische Schalter umfassen, z. B. Thyristoren, Varistoren oder jedes andere geeignete Element, die parallel oder antiparallel angeordnet sein können. In einem Beispiel kann jeder erste und zweite Stufenschalter ein Paar von lichtgesteuerten Thyristoren (LLTs) aufweisen. Das Paar von LLTs kann antiparallel angeordnet sein.

In einem Beispiel kann jeder erste und zweite Stufenschalter 231, 232 ein Paar elektrisch gesteuerte Thyristoren (ETTs) aufweisen. Die EETs können antiparallel angeordnet sein und jeder ETT kann eine in Reihe dazu angeordnete Impedanz aufweisen.

In einigen Beispielen kann das Laststufenschaltermodul 200 eine Impedanz 270, 280 aufweisen, die mit dem ersten oder zweiten Stufenschalter verbunden ist. Durch den Anschluss einer Impedanz kann der Überschneidungskurzschlussstrom reduziert werden, wodurch der Stufenschalter geschützt wird. In einem Beispiel kann das Laststufenschaltermodul 200 eine Impedanz 270, 280 aufweisen, die mit jedem der ersten und zweiten Stufenschalter verbunden ist. Die Impedanz kann zwischen dem Stufenschalter 231, 232 und der Transformatorwicklung angeordnet sein (siehe z. B. Schalter 231 und Impedanz 270 in Fig. 2A). In einem Beispiel kann der Schalter 231, 232 zwischen der Impedanz und der Wicklung angeordnet sein (siehe z. B. Stufenschalter 232 und Impedanz 280 von Fig. 2A).

Das Laststufenschaltermodul 200 kann ein Steuersystem bzw. eine Steuereinrichtung 240, z. B. einen Mikrocontroller, aufweisen, das Steuersignale erzeugen kann, um den Betrieb des Laststufenschaltermoduls 200 zu steuern. Das Steuersystem 240 kann so eingerichtet sein, dass es den ersten und den zweiten Stufenschalter wahlweise ein- und ausschaltet und dadurch unterschiedliche Strompfade zwischen der ersten und der zweiten Transformatorwicklung bestimmt. So kann das Übersetzungsverhältnis des Transformators eingestellt oder angepasst werden. Der erste und der zweite Stufenschalter 231, 232 können daher so eingerichtet sein, dass sie von der Steuerung selektiv ein- und ausgeschaltet werden können.

Zusätzlich kann das Laststufenschaltermodul 200 eine Klemmschaltung oder eine so genannte "crowbar" 250 aufweisen, um ein vordefiniertes Übersetzungsverhältnis bereitzustellen. Die Klemmschaltung 250 kann so eingerichtet sein, dass sie bei Überschreiten einer vorbestimmten Schwellenspannung, z. B. eines Überspannungswertes von etwa 7 kV, einen vordefinierten Strompfad bereitstellt. Dadurch kann das Laststufenschaltermodul 200 im Falle einer Überspannung vor einem internen Ausfall oder bei einem Hochlauf-/Anlaufereignis (Kaltstart) geschützt werden bzw. der Stufenschalter geschützt werden. Außerdem kann die Klemmschaltung bei fehlender Spannungsversorgung der Steuereinrichtung den Betrieb des Stufenschalters ermöglichen, bis die Spannungsversorgung für die Steuerung wieder ordnungsgemäß hergestellt ist.

So kann die Überbrückung der Transformator-Stufenwicklungen vordefiniert werden, d. h. sie kann zu einem vordefinierten Zeitpunkt erfolgen (bei Überschreiten der vorbestimmten Schwellenspannung), wobei das System durch die Klemmschaltung sicher betrieben werden kann. Darüber hinaus kann ein permanenter Kurzschluss zwischen den Wicklungen vermieden werden, was unerwünschte Effekte durch undefinierte Zustände der Stufenschalter verhindert. Dadurch kann ein sicherer Betrieb gewährleistet werden.

Die Klemmschaltung 250 kann an einer beliebigen Stelle jeder ersten und zweiten Wicklung angeordnet sein, z. B. an einer Stelle, an der ein Stufenschalter angeschlossen ist. Ein Ende der Klemmschaltung kann direkt oder indirekt mit einem Anschluss der ersten Wicklung verbunden sein, und das andere Ende kann direkt oder indirekt mit einem Anschluss der zweiten Transformatorwicklung verbunden sein. In einem Beispiel kann die Klemmschaltung 250 so angeordnet sein, dass sie den Strompfad mit der niedrigsten Impedanz bereitstellt. Daher kann das Stufenschaltermodul beim Überschreiten einer Schwellenspannung kontrolliert über einen vordefinierten Pfad kurzgeschlossen werden, d. h. ein zufälliges Kurzschließen aufgrund undefinierter Schalterzustände kann vermieden werden.

Die Klemmschaltung 250 kann einen oder mehrere mechanische oder elektromechanische Schalter umfassen, z. B. Thyristor, Varistor, IGBT oder jedes andere geeignete Element, das bei einem vordefinierten Schwellenwert geschaltet werden kann.

In einem Beispiel kann die Klemmschaltung 250 ein Paar lichtgesteuerte Thyristoren (LLTs) aufweisen. Das Paar von LLTs kann antiparallel angeordnet sein.

In einem Beispiel kann die Klemmschaltung 250 ein Paar elektrisch gesteuerte Thyristoren (ETTs) aufweisen. Die ETTs können antiparallel angeordnet sein und jeder ETT kann einen mit Gate und Anode verbundenen Schalter, z. B. eine Break-Over-Diode (BOD), eine Zener-Diode, einen Varistor oder ein anderes geeignetes Element aufweisen. In einem Beispiel kann die Klemmschaltung eine Impedanz aufweisen. In einem Beispiel kann die Klemmschaltung eine weitere z. B. eine Diode und eine Impedanz aufweisen.

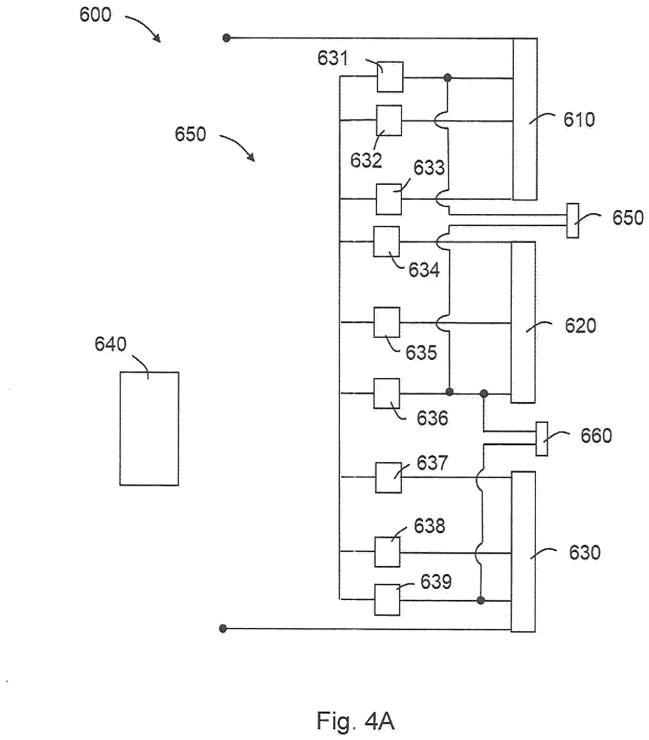

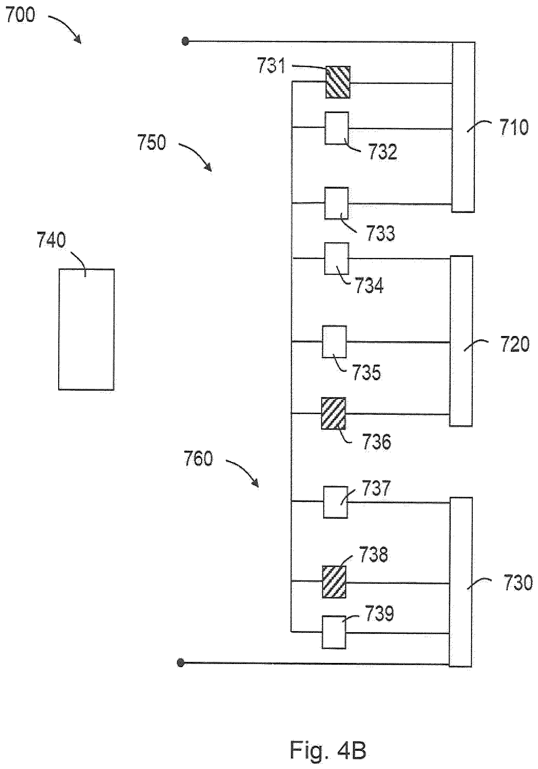

In den Beispielen der Fig. 2A ist ein Laststufenschaltermodul mit zwei Wicklungen und einer einzigen Klemmschaltung dargestellt, die die erste und zweite Transformatorwicklung verbindet. In einigen Beispielen (siehe Fig. 4A, 4B) kann das Stufenschaltermodul jedoch mehr als zwei Wicklungen umfassen.

In Beispielen, in denen das Stufenschaltermodul zwei oder mehr Wicklungen umfasst, kann es eine Vielzahl von Klemmschaltungen aufweisen. Die Anzahl der Klemmschaltungen kann von der Anzahl der Wicklungen abhängen, außer in Beispielen, die eine einzige Transformatorwicklung umfassen, bei denen die Anzahl der Klemmschaltungen der Anzahl der Wicklungen, d. h. einer, entsprechen kann. In einem Beispiel kann die Anzahl der Klemmschaltung(en) n-1 der Anzahl der Transformatorwicklungen entsprechen, d. h. es kann eine Klemmschaltung für jedes Paar Transformatorwicklungen verwendet werden. In Beispielen, die drei Transformatorwicklungen umfassen, können beispielsweise zwei Klemmschaltungen verwendet werden (jeder mit einem Paar von Wicklungen verbunden). In Beispielen, die fünf Wicklungen umfassen, können vier Klemmschaltungen verwendet werden.

Zusätzlich kann das Stufenschaltermodul 200 eine mechanische Klemmvorrichtung (nicht dargestellt) aufweisen, die so eingerichtet ist, dass sie mechanischen Druck zumindest auf die Klemmschaltung bzw. "crowbar" ausübt und dadurch eine ordnungsgemäße Funktion gewährleistet. In einem Beispiel können die Schalter und die Klemmschaltung(en) des Laststufenschaltermoduls 200 innerhalb einer einzigen mechanischen Klemmvorrichtung angeordnet sein. In einem Beispiel kann eine Vielzahl von mechanischen Klemmvorrichtungen verwendet werden. Zum Beispiel kann/können jeder Schalter und/oder jede Klemmschaltung innerhalb einer jeweiligen mechanischen Klemmvorrichtung angeordnet sein.

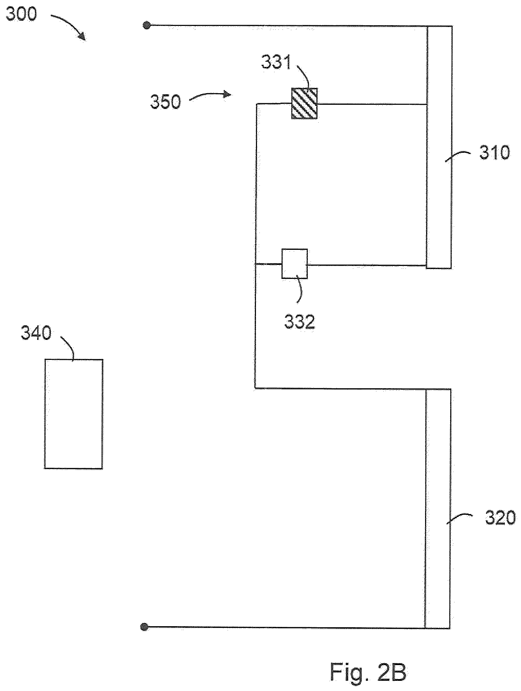

Fig. 2B zeigt ein Laststufenschaltermodul 300, der dem Laststufenschaltermodul 200 aus Fig. 2A ähnlich ist, wobei jedoch die Klemmschaltung 350 durch einen oder mehrere Stufenschalter des Laststufenschaltermoduls, z. B. durch den ersten Stufenschalter oder den zweiten Stufenschalter, realisiert werden kann. Im Beispiel von Fig. 2B ist der erste Stufenschalter 331 als Klemmschaltung 350 ausgelegt.

Der Schalter, der die Klemmschaltung 350 implementiert, kann ein Schalter ähnlich oder gemäß einem der hierin offenbarten Beispiele sein, der jedoch bei Überschreiten eines vorbestimmten Spannungsschwellenwerts ein-/ausgeschaltet werden kann und nicht wahlweise durch das Steuersystem/die Steuereinrichtung 240 ein-/ausgeschaltet wird.

In einem Beispiel kann das Stufenschaltermodul 300 eine mechanische Klemmvorrichtung (nicht dargestellt) aufweisen, die so eingerichtet ist, dass sie mechanischen Druck zumindest auf die Klemmschaltung ausübt und dadurch eine ordnungsgemäße Funktion gewährleistet. In einem Beispiel können der/die Stufenschalter und die Klemmschaltung(en) des Laststufenschaltermoduls 300 innerhalb einer einzigen mechanischen Klemmvorrichtung angeordnet sein. In einem Beispiel kann eine Vielzahl von mechanischen Klemmvorrichtungen verwendet werden. So kann z. B. jeder Stufenschalter und/oder jede Klemmschaltung innerhalb einer jeweiligen mechanischen Klemmvorrichtung angeordnet sein.

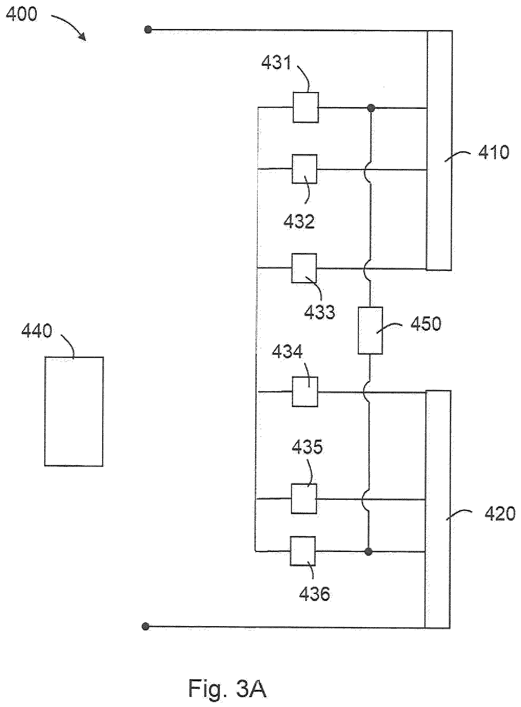

In Fig. 3A ist ein Laststufenschaltermodul 400 gemäß einem weiteren Beispiel dargestellt. Das Laststufenschaltermodul 400 kann zwei Transformatorwicklungen 410, 420, ein Steuersystem bzw. Steuereinrichtung 440 und eine Klemmschaltung 450 gemäß einem der dargestellten Beispiele umfassen.

Das Laststufenschaltermodul 400 unterscheidet sich von dem Laststufenschaltermodul 200 aus Fig. 2A dadurch, dass es eine Vielzahl von Stufenschaltern aufweisen kann. Das Laststufenschaltermodul 400 kann sechs Schalter 431, 432, 433, 434, 435, 436 gemäß jedem der offenbarten Beispiele aufweisen. Durch eine Vielzahl von Stufenschaltern kann ein vielseitigeres Laststufenschaltermodul bereitgestellt werden, da mehr Übersetzungsverhältnisse mit der gleichen Anzahl von Transformatorwicklungen bereitgestellt werden können.

Im Beispiel der Fig. 3A kann jedes Ende der Klemmschaltung 450 mit dem Schalterpaar verbunden werden, das den Strompfad mit der niedrigsten Impedanz bereitstellt, d. h. mit dem Stufenschalter 431 und dem Stufenschalter 436. Durch die Umgehung der Transformator-Stufenwicklungen über den Strompfad mit der niedrigsten Impedanz kann der Hochlauf des Systems ermöglicht und darüber hinaus die Zerstörung des Systems im Falle eines internen Fehlers verhindert werden. In einem Beispiel kann die Klemmschaltung 450 direkt oder indirekt an einem beliebigen Punkt der ersten und zweiten Transformatorwicklungen 410, 420 angeschlossen sein.

Das Laststufenschaltermodul 400 kann weiterhin eine mechanische Klemmvorrichtung (nicht dargestellt) aufweisen. In einem Beispiel kann eine einzige mechanische Klemmvorrichtung alle darin angeordneten Schalter und Klemmschaltung(en) umfassen. In einigen Beispielen kann eine Vielzahl mechanischer Klemmvorrichtungen verwendet werden, z. B. kann jeder Schalter und jede Klemmschaltung innerhalb einer jeweiligen mechanischen Klemmvorrichtung angeordnet sein.

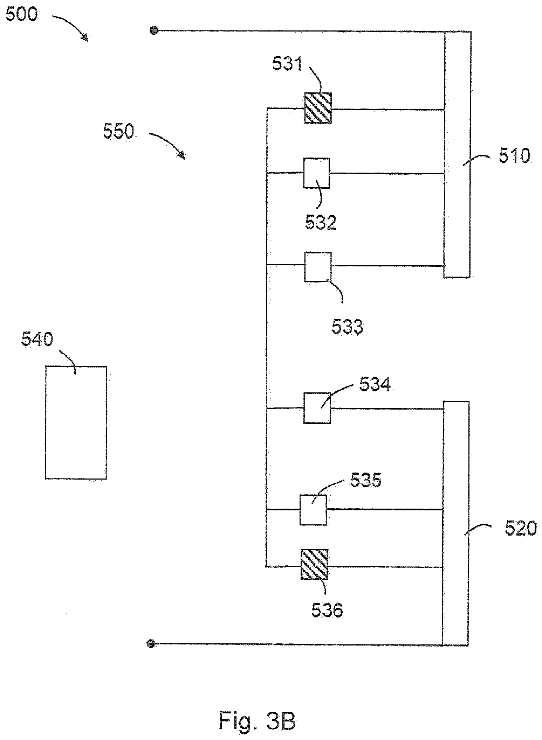

In Fig. 3B ist ein Laststufenschaltermodul 500 dargestellt, das zwei Wicklungen 540, 520, ein Steuersystem/Steuereinrichtung 540 und vier Stufenschalter 522-535 gemäß einem der hierin offenbarten Beispiele umfassen kann. Das Laststufenschaltermodul 500 unterscheidet sich von dem Laststufenschaltermodul der Fig. 3A dadurch, dass die Klemmschaltung 500 durch zwei Stufenschalter des Laststufenschaltermoduls realisiert ist.

Im gezeigten Beispiel sind die Schalter 531 und 536 für die Implementierung der Klemmschaltung 550 ausgelegt, da sie den Strompfad mit der niedrigsten Impedanz definieren. Es können jedoch auch beliebige andere Stufenschalter zur Implementierung der Klemmschaltung verwendet werden.

Wie in den Beispielen der Fig. 1A und 2B können die Schalter, die die Klemmschaltung implementieren, ähnlich wie jedes der hierin offenbarten Beispiele sein, die jedoch bei Überschreiten eines vorbestimmten Spannungsschwellenwerts ein- und ausgeschaltet werden können und nicht wahlweise durch das Steuersystem/die Steuereinrichtung 540 ein- bzw. ausgeschaltet werden.

Fig. 4A zeigt ein Laststufenschaltermodul 600 gemäß einem noch weiteren Beispiel. Das Laststufenschaltermodul 600 kann drei Transformatorwicklungen 610, 620, 630, ein Steuersystem/Steuereinrichtung 640 und mehrere, z. B. neun, Stufenschalter 631 - 639 gemäß einem der hierin offenbarten Beispiele umfassen.

Das Laststufenschaltermodul kann ferner zwei Klemmschaltungen 650, 660 gemäß einem der hierin offenbarten Beispiele aufweisen. Ein Ende jeder Klemmschaltung 650, 660 kann direkt oder indirekt mit einem Punkt/Anschluss einer Transformatorwicklung 610, 620, 630 verbunden sein und das andere Ende kann direkt oder indirekt mit einem Punkt/Anschluss einer nachfolgenden Transformatorwicklung 610, 620, 630 verbunden sein.

In Fig. 4A kann eine erste Klemmschaltung 650 an einem Ende mit der ersten Wicklung 610 und am anderen Ende mit der zweiten Wicklung 620 verbunden sein. Zusätzlich kann eine zweite Klemmschaltung 660 an einem Ende mit der zweiten Wicklung 620 und am anderen Ende mit der dritten Wicklung 630 verbunden sein. In einem Beispiel können beide Klemmschaltungen so angeschlossen werden, dass sie den Strompfad mit der niedrigsten Impedanz zwischen zwei aufeinanderfolgenden Wicklungen bilden, d. h. zwischen der ersten und der zweiten Wicklung und zwischen der zweiten und der dritten Wicklung.

Alle Klemmschaltungen des Laststufenschaltermoduls 600 können so eingerichtet werden, dass sie bei Überschreiten des gleichen Spannungsschwellenwerts, z. B. etwa 7 kV, geschaltet werden, wodurch ein vorgegebener Strompfad bestimmt wird, über den der Strom fließen kann.

Das Laststufenschaltermodul 600 kann ferner eine mechanische Klemmvorrichtung (nicht dargestellt) aufweisen. In einem Beispiel kann eine einzige mechanische Klemmvorrichtung alle darin angeordneten Schalter und Klemmschaltung(en) umfassen. In einigen Beispielen kann eine Vielzahl mechanischer Klemmvorrichtungen verwendet werden, z. B. kann jeder Schalter und jede Klemmschaltung innerhalb einer jeweiligen mechanischen Klemmvorrichtung angeordnet sein.

In Fig. 4B ist ein Laststufenschaltermodul 700 dargestellt, der dem Laststufenschaltermodul 600 aus Fig. 4B ähnelt. Das Laststufenschaltermodul 700 kann ein Steuersystem/eine Steuereinrichtung 740, mehrere, z. B. drei, Wicklungen 710-730 und mehrere Stufenschalter, z. B. sechs, 732-735, 737, 739 gemäß einem der hierin offenbarten Beispiele umfassen.

Das Laststufenschaltermodul 700 unterscheidet sich von dem aus Fig. 4A dadurch, dass die Klemmschaltungen 750, 760 mit Stufenschaltern des Laststufenschaltermoduls realisiert werden können. Im Beispiel von Fig. 4B kann die Klemmschaltung 750 durch die Stufenschalter 731 und 736 realisiert werden, während die Klemmschaltung 760 durch die Stufenschalter 736 und 738 realisiert werden kann. Wie im Beispiel von Fig. 3B können die Stufenschalter, die eine Klemmschaltung implementieren, ähnlich wie in jedem der hierin offenbarten Beispiele sein, jedoch so eingerichtet sein, dass sie bei Überschreiten eines vorbestimmten Spannungsschwellenwerts ein- bzw. ausgeschaltet werden und nicht wahlweise durch das Steuersystem/die Steuereinrichtung 740 ein- bzw. ausgeschaltet werden.

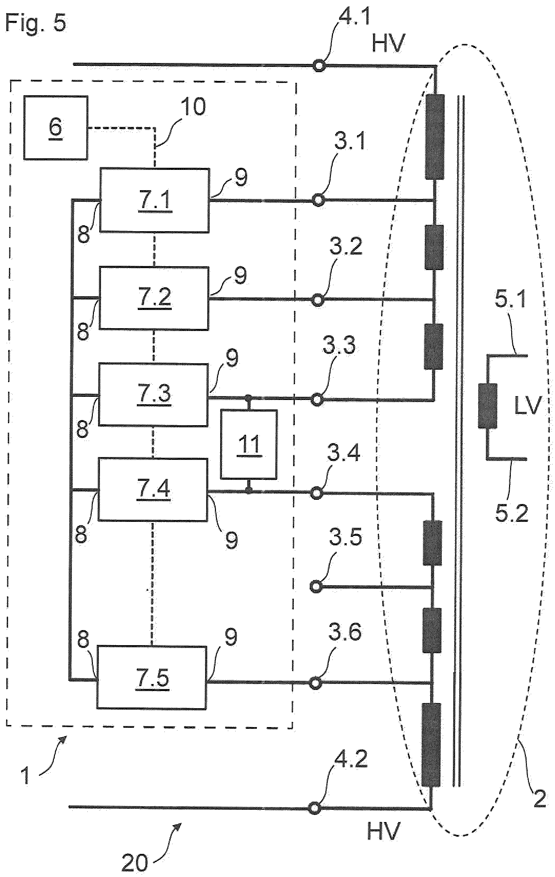

Fig. 5 stellt ein Schaltungsdiagramm eines Ausführungsbeispiels eines Laststufenschaltermoduls 1 zur Einstellung eines Übersetzungsverhältnisses eines Leistungstransformators 2 gemäß der Erfindung dar. Der Leistungstransformator 2 kann in dem gezeigten Beispiel ein mehrphasiger Nieder-, Mittel- oder Hochspannungstransformator sein, wobei Fig. 1 lediglich eine Phase hiervon zeigt. Der Leistungstransformator 2 kann beispielsweise für Leistungen in einem Bereich von etwa 1 MVA bis etwa 100 MVA ausgelegt sein, ohne jedoch zwingend hierauf beschränkt zu sein.

Fig. 5 ist zu entnehmen, dass der Transformators 2 verschiedene Wicklungsabgriffe 3.1, 3.2, 3.3, 3.4, 3.5, die hierin auch als Anzapfungen oder Stufenabgriffe 3 bezeichnet werden können, einer (vorliegend oberseitigen) Transformatorwicklung bzw. Stufenwicklung aufweisen kann. Über die oberseitigen Transformatoranschlüsse 4.1 und 4.2 kann dem Transformator 2 in dem vorliegenden Beispiel eine Hochspannung zugeführt werden, zum Beispiel in einem Bereich von etwa 1 kV bis etwa 50 kV oder etwa 1 kV bis etwa 60 kV oder auch höher als 60 kV, ohne jedoch zwingend auf die vorgenannten Spannungswerte beschränkt zu sein. Der Leistungstransformator 2 des dargestellten Ausführungsbeispiels kann dementsprechend als Hochspannungstransformator bezeichnet werden. Die unterseitige Transformatorwicklung kann unterseitige Transformatoranschlüsse 5.1 und 5.2 aufweisen, an denen dem Transformator 2 die transformierte Niederspannung entnommen werden kann, beispielsweise Wechselspannungen kleiner als 1000 V.

Bei dem in Fig. 5 gezeigten Beispiel können die Anzapfungen 3.1, 3.2 und 3.3 verwendet werden, die Spannung in Stufen vorbestimmter Prozentanteile zu ändern. Die Anzahl und Größe der einstellbaren Stufen kann je nach konkretem Anwendungsfall vorab festgelegt werden.

Weiter ist Fig. 5 zu entnehmen, dass das beispielhafte Laststufenschaltermodul 1 eine elektronische Steuereinrichtung 6 aufweist sowie vorliegend insgesamt fünf mittels der Steuereinrichtung 6 steuerbare, d. h. im Wesentlichen ein- und ausschaltbare, Stufenschalter 7, nämlich 7.1, 7.2, 7.3, 7.4, 7.5.

Zum Beispiel können die Schalter elektronische Schalter, elektromechanische Schalter oder eine Kombination davon sein.

Die Steuereinrichtung 6 kann beispielsweise eine elektronische Rechen- und Speichereinheit aufweisen (nicht explizit dargestellt), wie beispielsweise einen Mikroprozessor, Mikrocontroller und dergleichen sowie flüchtigen und/oder nichtflüchtigen Speicher in Form von RAM-, ROM-, Flash-Speicher etc.).

Die Stufenschalter 7 weisen jeweils einen ersten elektrischen Anschluss 8 auf, über welchen sie untereinander verbunden bzw. zusammengeschaltet werden können, wie vorliegend Fig. 5 zu entnehmen ist. Weiterhin weisen die Stufenschalter 7 jeweils einen wicklungsseitigen, zweiten elektrischen Anschluss 9 auf, über welchen sie jeweils mit einem der Abgriffe 3 der Transformatorwicklung verbunden werden können bzw. vorliegend verbunden sind, wie ebenfalls Fig. 5 zu entnehmen ist.

Die Stufenschalter 7 können abwechselnd zwischen ihren jeweiligen beiden Anschlüssen 8 und 9 in den leitenden und nichtleitenden Zustand versetzt bzw. geschaltet werden. Die Steuereinrichtung 6 ist eingerichtet, die jeweiligen Stufenschalter 7 über entsprechende, den jeweiligen Stufenschaltern 7 zugeführte Steuersignale 10 in ihre jeweiligen Zustände zu schalten, wie in Fig. 5 angedeutet ist. Die Steuersignale 10 können elektrische oder optische Steuersignale sein. Vorliegend sind die Steuersignale 10 optische Steuersignale, ohne jedoch zwingend hierauf beschränkt zu sein.

Durch das Schalten der jeweiligen Stufenschalter 7 in ihre jeweiligen leitenden oder sperrenden Zustände kann die Steuereinrichtung 6 das wirksame Übersetzungsverhältnis des Transformators 2 einstellen, wie vorstehend bereits beschrieben wurde.

Fig. 5 ist weiter zu entnehmen, dass vorliegend die wicklungsseitigen, zweiten Anschlüsse 9 der beiden Stufenschalter 7.3 und 7.4 über eine Klemmschaltung **11** ("crowbar") zur Spannungsbegrenzung unmittelbar oder mittelbar miteinander elektrisch verbunden sein können. Obwohl vorliegend die Schalter 7.3 und 7.4 elektrisch über die Klemmschaltung verbunden sind, können auch andere Schalter mittels der Klemmschaltung 11 und/oder weiterer Klemmschaltungen (nicht dargestellt) elektrisch verbunden werden.

Die Klemmschaltung 11 des gezeigten beispielhaften Laststufenschaltermoduls 1 kann zwei bzw. ein Paar antiparallel geschaltete Kippdiodenstrukturen 12.1, 12.2 aufweisen, die in dem vorliegenden Beispiel in einem Thyristor mit einer Break-Over-Diodenstruktur (BOD) ausgebildet sind und jeweils eine vorbestimmte Durchbruchspannung aufweisen, deren Überschreiten die jeweiligen Kippdiodenstrukturen 12 aus ihrem nichtleitenden, sperrenden Grundzustand automatisch in einen leitenden Zustand versetzt. Dementsprechend sind die wicklungsseitigen Anschlüsse 9 der zwei Stufenschalter 7.3 und 7.4 und dementsprechend gleichfalls die Wicklungsabgriffe 3.3 und 3.4 des Transformators 2 bei dem vorliegend gezeigten Beispiel über die Klemmschaltung **11** je nach augenblicklich anliegender Spannungshöhe und Spannungspolarität zwischen den Anzapfungen 3.3 und 3.4 bei Überschreiten der entsprechenden Durchbruchspannung der Kippdiodenstrukturen 12.1 bzw. 12.2 automatisch kurzschließbar. Durch gezieltes Festlegen der jeweiligen Durchbruchspannungen, die im Wesentlichen gleich oder verschieden sein können, kann demzufolge eine Überspannung zwischen den über die Klemmschaltung 11 miteinander verbundenen Anschlüssen 3.3 und 3.4 zuverlässig vermieden werden.

Die elektrische Spannung in Nieder-, Mittelspannungs- oder Hochspannungsnetzen, zum Beispiel in Windenergie-, Photovoltaik- oder Bahnstromanlagen, kann instabil sein, insbesondere in einem Bereich von -20 % bis +20 % der Nennspannung schwanken. Ein Stufentransformator wie der in Fig. 5 gezeigte Transformator 2 kann wirksam auf solche Spannungsschwankungen reagieren.

Um möglichst schnell auf derartige Spannungsschwankungen reagieren zu können, können die Stufenschalter 7 des Laststufenschaltermoduls 1 zwischen ihren ersten und zweiten Anschlüssen 8 und 9 jeweils zwei bzw. ein Paar antiparallel geschaltete, von der Steuereinrichtung 6 steuerbare Leistungshalbleiterschalter 13.1 und 13.2 aufweisen, die als Thyristoren ausgebildet sein können, wie in Fig. 2 in einer detaillierteren Ansicht des Laststufenschaltermoduls 1 aus Fig. 5 zu erkennen ist. Beispielsweise können die Leistungshalbleiterschalter 13.1 und 13.2 des Laststufenschaltermoduls 1 als lichtgesteuerte Thyristoren (LTT) ausgebildet sein, ohne zwingend hierauf beschränkt zu sein. Die LTTs 13.1 und 13.2 können über das von der Steuereinrichtung 6 ausgegebene optische Steuersignal 10 steuerbar sein, das heißt jeweils zwischen ihren leitenden und nichtleitenden, sperrenden Zuständen schaltbar sein (ein- ausschaltbar). In Fig. 2 sind die Leistungshalbleiterbauelemente 13.1 und 13.2 lediglich für den Stufenschalter 7.1 mit eigenen Bezugszeichen gekennzeichnet. Es ist jedoch zu verstehen, dass die weiteren Stufenschalter 7.2, 7.3, 7.4 und 7.5 jeweils ebenfalls Thyristoren bzw. LTTs 13.1 und 13.2 in derselben Art wie der Stufenschalter 7.1 aufweisen können.

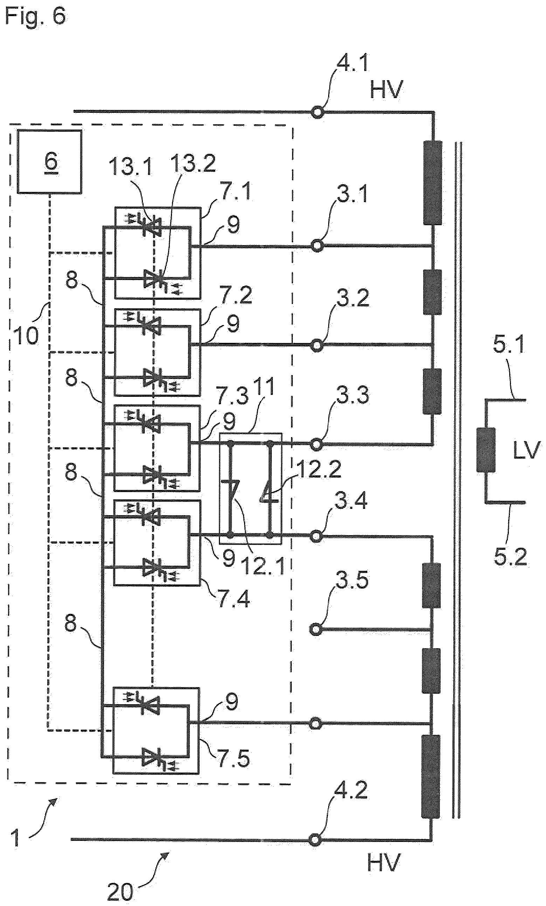

Die Steuereinrichtung 6 des in den Fig. 5 und 6 gezeigten Laststufenschaltermoduls 1 muss keine (separate, zusätzliche) Hilfsenergiequelle aufweisen, aus der sie sich für ihren Betrieb speist. Vielmehr kann sich die Steuereinrichtung 6 vorliegend ausschließlich aus der Anlagenspannung, das heißt aus der vom Leistungstransformator 2 zu transformierenden bzw. diesem zugeführten oder entnehmbaren elektrischen Spannung HV bzw. LV, speisen.

Beim Anlaufen der elektrischen Anlage bzw. Wiederanlaufen nach einem Spannungsausfall, d. h. allgemein bei einem Kaltstart, bei dem die vom Transformator zu transformierende Spannung, z. B. Nieder-, Mittel- oder Hochspannung, noch nicht anliegt, kann folglich die Steuereinrichtung 6 des Laststufenschaltermoduls 1 nicht bereit sein, die Stufenschalter 7 ordnungsgemäß zu schalten. Mit anderen Worten kann beim Anlaufen ein zufälliger, jedenfalls von der sich temporär in einem nicht funktionsbereiten Zustand befindenden Steuereinrichtung 6 noch nicht steuerbarer Schaltzustand der jeweiligen Stufenschalter 7 vorliegen. Bei dem in den Fig. 5 und 6 gezeigten Beispiel kann dies zur Folge haben, dass die Spannung zwischen den Abgriffen 3.3 und 3.4 bis auf den Wert der Einspeisespannung HV ansteigt. Um einen unsicheren Betriebszustand sowie eine mögliche Beschädigung der Stufenschalter 7, insbesondere bei Verwendung von Thyristoren als Stufenschalter, zuverlässig zu verhindern, kann die Klemmschaltung 11 für den gewünschten Überspannungsschutz sorgen, indem die Durchbruchspannung zum Beispiel der Kippdiodenstrukturen 12.1 und 12.2 auf einen Wert deutlich unterhalb der Einspeisespannung HV festgelegt ist, so dass diese während eines solchen Überspannungszustands kurzschließen.

Die Aktivierung/Einschalten der Klemmschaltung 11 bei einer wohldefinierten Überspannung lässt die elektrische Anlage stets unter sicheren Betriebsbedingungen laufen, bis die Steuereinrichtung 6 betriebsfähig ist und die die Ansteuerung der Stufenschalter 7 bzw. Thyristoren 13 ordnungsgemäß übernehmen kann. Wenn alle Wicklungsabgriffe 3 von der Steuereinrichtung 6 über die Stufenschalter 7 ordnungsgemäß gesteuert werden, ist die Spannung zum Beispiel zwischen den Abgriffen 3.3 und 3.4 wieder auf einem niedrigen Spannungsniveau unterhalb der vorbestimmten Durchbruchspannungen der Kippdiodenstrukturen 12.1 und 12.2, so dass die Klemmschaltung 11 inaktiv und nichtleitend werden kann und folglich den normalen Anlagenbetrieb nicht stören kann.

Das Laststufenschaltermodul 1 stellt einen sicheren, kontrollierten und robusten Anlauf ohne eine externe Ansteuerung bzw. Energieversorgung des Laststufenschaltermoduls 1 bzw. der Steuereinrichtung 6 bereit. Das kann besonders vorteilhaft sein, wenn bei fehlender Anlagenspannung eine Hilfsspannung/Hilfsenergieversorgung für das Laststufenschaltermodul 1 bzw. die Steuereinrichtung 6 nicht zur Verfügung steht.

Im Falle eines Ausfalls der Klemmschaltung 11 werden die Kippdiodenstrukturen (oder andere Elemente) der Klemmschaltung kurzgeschlossen und halten das System dennoch stets in einem sicheren Betriebszustand.

Die Anzahl und jeweilige Anordnung der Klemmschaltung kann flexibel und nicht zwingend auf das in den Fig. 5 und 6 gezeigte Beispiel beschränkt sein. Je nach konkretem Anwendungsfall kann/können Klemmschaltung(en) vorgesehen sein, die beispielsweise die Abgriffe 3.3 und 3.4 oder 3.1 und 3.5 oder auch andere Kombinationen von Anzapfungen 3 elektrisch verbinden und sicher vor Überspannung schützen. Grundsätzlich kann die Klemmschaltung 11 an allen Anzapfungen 3 angeschlossen werden.

Weiterhin kann auch in solchen Fällen (nicht dargestellt), in denen der Leistungstransformator eine einzige Stufenwicklung aufweist, das Laststufenschaltermodul wirksam mit den hierin beschriebenen Wirkungen und Vorteilen eingesetzt werden kann. Es kann in diesem Fall jeweils ein Stufenschalter des Laststufenschaltermoduls wie in den Fig. 5 und 6 gezeigt an jeweils einem von zwei Wicklungsabgriffen der einzigen Stufenwicklung des Transformators angeschlossen sein, wobei ein zusätzlicher dritter Stufenschalter bereitgestellt ist/wird, der im Normalbetrieb der elektrischen Anlage dann permanent offen sein kann und im Bedarfsfall leitend geschaltet werden kann (z. B. wenn die Steuereinrichtung nicht elektrisch versorgt ist), um den sicheren Anlagenbetrieb im Sinne der vorliegenden Erfindung zu gewährleisten.

Ferner sei darauf hingewiesen, dass die in den Fig. 5 und 6 gezeigte Konfiguration in einer Anordnung 20 verwendet werden kann, die den Leistungstransformator 2 mit den verschiedenen Anzapfungen 3 der Transformatorwicklung und das Laststufenschaltermodul 1 gemäß der Erfindung zur Einstellung des Übersetzungsverhältnisses des Leistungstransformators 2 aufweisen kann, wobei die wicklungsseitigen, zweiten elektrischen Anschlüsse 9 der Stufenschalter 7 mit jeweils einem der Anzapfungen 3 der Transformatorwicklung elektrisch verbunden sein können.

Das Einstellen des Übersetzungsverhältnisses des Leistungstransformators 2 kann beispielhaft mittels des Laststufenschaltermoduls 1 aus Fig. 5 durchgeführt werden, indem die elektronische Steuereinrichtung 1 bereitgestellt wird zum Beispiel drei durch die Steuereinrichtung 1 zur Einstellung des Übersetzungsverhältnisses steuerbare Stufenschalter 7bereitgestellt werden. Die Stufenschalter 7 können untereinander jeweils über ihren ersten elektrischen Anschluss 8 elektrisch verbunden werden, die wicklungsseitigen, zweiten elektrischen Anschlüsse 9 der Stufenschalter 7 können jeweils mit einem der Abgriffe 3 der Transformatorwicklung elektrisch verbunden werden. Die wicklungsseitigen, zweiten Anschlüsse 9 wenigstens zweier der Stufenschalter 7 können über die Klemmschaltung 11 zur Spannungsbegrenzung miteinander verbunden werden. Zum Beispiel kann die Klemmschaltung hierzu mit einem Paar antiparallel geschalteter, die wicklungsseitigen Anschlüsse 9 der wenigstens zwei Stufenschalter 7 miteinander elektrisch verbindenden Kippdiodenstrukturen 12.1 und 12.2 mit jeweils vorbestimmten Durchbruchspannungen bereitgestellt werden. Die Stufenschalter 7 können eingerichtet sein, mittels der Steuereinrichtung 6 wahlweise geschaltet zu werden.

Zum Beispiel kann die Steuereinrichtung 6 ausschließlich aus der vom Leistungstransformator 2 zu transformierenden bzw. diesem zugeführten oder entnehmbaren elektrischen Spannung HV, LV gespeist werden.

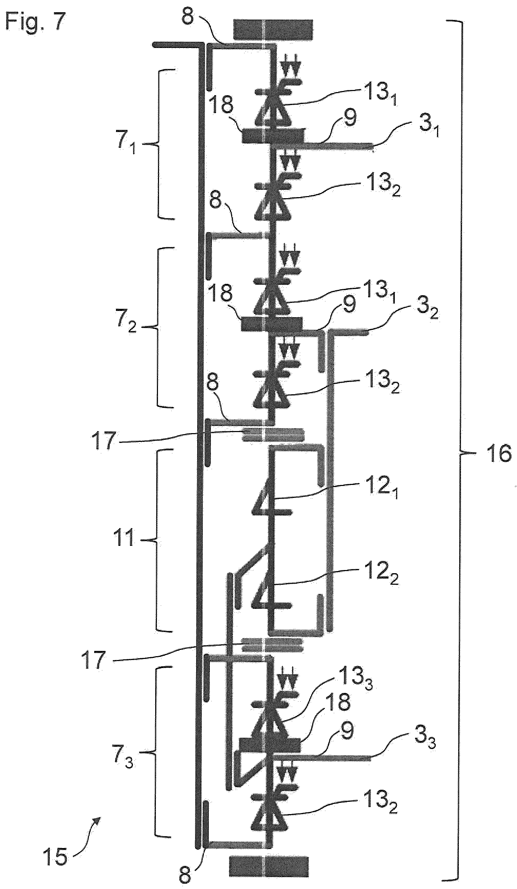

Fig. 7 stellt ein weiteres Ausführungsbeispiel eines Laststufenschaltermoduls 15 zur Einstellung eines Übersetzungsverhältnisses eines Leistungstransformators (nicht dargestellt) gemäß der Erfindung dar. Im Wesentlichen kann das Laststufenschaltermodul 15 aus Fig. 7 dem Laststufenschaltermodul 1 aus Fig. 5 entsprechen.

Im Unterschied zum Laststufenschaltermodul 1 weist das Laststufenschaltermodul 15 allerdings drei elektronische Stufenschalter 7.1, 7.2 und 7.3 auf. Jeder dieser Stufenschalter 7 kann zwischen seinem ersten und zweiten Anschluss 8, 9 zwei antiparallel geschaltete, von einer Steuereinrichtung wahlweise steuerbare Leistungshalbleiterschalter 13.1, 13.2 aufweisen, die zum Beispiel als Thyristoren, insbesondere lichtgesteuerte Thyristoren ausgebildet sein können. Die Steuereinrichtung des Laststufenschaltermoduls 15 zur Einstellung des Übersetzungsverhältnisses des Transformators durch wahlweises Schalten der Stufenschalter 7 ist in Fig. 7 nicht gezeigt. Die Verschaltung der Stufenschalter 7.1, 7.2 und 7.3 beim Laststufenschaltermodul 15 untereinander sowie mit den Abgriffen 3.1, 3.2 bzw. 3.3 kann der Verschaltung wie beim Laststufenschaltermodul 1 aus Fig. 5 entsprechen.

Des Weiteren kann bei dem Laststufenschaltermodul 15 zwischen den Abgriffen 3.2 und 3.3 die Klemmschaltung 11 (oder "crowbar") geschaltet sein, die wiederum die beiden antiparallel geschalteten Kippdiodenstrukturen 12.1 und 12.2 mit ihren jeweils vorbestimmten Durchbruchspannungen aufweisen kann. Bei dem Laststufenschaltermodul 15 können die Kippdiodenstrukturen 12.1 und 12.2 jeweils als in separaten Thyristoren mit einer Break-Over-Diodenstruktur (BOD) als Überspannungsschutz ausgebildet sein, die ebenfalls lichtgesteuerte Thyristoren (LTT) sein können, ohne jedoch zwingend hierauf beschränkt zu sein. Die Lichtsteuerung der die Kippdiodenstrukturen 12.1 und 12.2 bildenden LTTs muss für die Erfindung nicht erforderlich sein und kann daher bei dem Laststufenschaltermodul 15 ungenutzt bleiben. Die Thyristoren können ausschließlich über die BOD-Strukturen 12.1 und 12.2 bei Anliegen einer über der vorbestimmten jeweiligen Durchbruchspannung liegenden Überspannung gezündet, das heißt in ihren leitenden Zustand geschaltet werden.

Zusätzlich zur BOD-Struktur, die einen Überspannungsschutz abhängig von einer vorbestimmten Spannungshöhe bereitstellen kann, können die die Kippdiodenstrukturen 12.1 und 12.2 bildenden Thyristoren der Klemmschaltung 11 auch einen so genannten du/dt-Schutz aufweisen, der die jeweiligen Klemmschaltungs-Thyristoren abhängig von einer vorbestimmten Steilheit einer Spannungsänderung zünden bzw. durchschalten kann. Auf diese Weise kann auch vor Überschreiten der Durchbruchspannung an den Kippdiodenstrukturen 12.1 und 12.2 der Thyristor bereits leitend schalten, so dass das Laststufenschaltermodul auf hochtransiente Spannungsereignisse schnell reagieren kann.

Wie Fig. 7 zu entnehmen ist, können die die Leistungshalbleiterschalter bildenden Thyristoren 13.1 und 13.2 und die die Kippdiodenstrukturen 12.1 und 12.2 bildenden Thyristoren mechanisch gemeinsam in einem Thyristorstapel 16 gestapelt bzw. übereinandergestapelt angeordnet und druckkontaktiert sein (Presspack). Hierbei können die die Klemmschaltung 11 bildenden Thyristoren gegenüber den geometrisch benachbarten Stufenschaltern 7.2 und 7.3 jeweils mittels in den Stapel eingefügter Isolatoren 17 elektrisch isoliert sein. Zusätzlich können in dem Thyristorstapel 16 die beiden, die Leistungshalbleiterschalter bildenden Thyristoren jeweils eines Stufenschalters 7.1, 7.2, 7.3 über eine eingefügte, gemeinsame Kühldose 18 gekühlt werden.

Die Ausbildung sowohl der Leistungshalbleiterschalter der Stufenschalter 7.1, 7.2, 7.3 als auch der Kippdiodenstrukturen 12.1, 12.2 der Kippschaltung 11 als Thyristoren, die, ohne zwingend hierauf beschränkt zu sein, bezüglich ihrer geometrischen und/oder technischen Eigenschaften gleich ausgebildet sein können, bietet den besonderen Vorteil, dass ein herkömmlicher Thyristorstapel gegen das Laststufenschaltermodul 15 gemäß der Erfindung ohne großen Aufwand auch an bereits bestehenden Energieanlagen ausgetauscht werden kann.

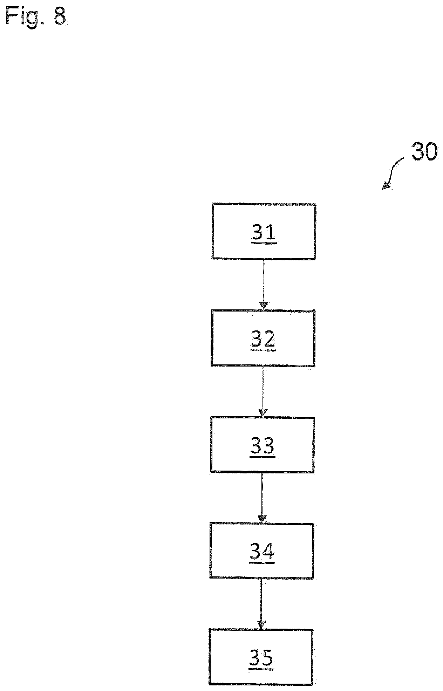

Fig. 8 stellt ein Ablaufdiagramm eines Ausführungsbeispiel eines Verfahrens 30 zum Betrieb eines Laststufenschaltermoduls gemäß der Erfindung dar. Das Laststufenschaltermodul kann zum Beispiel eines der in den Fig. 1 bis 7 gezeigten Laststufenschaltermodule sein, ohne jedoch zwingend hierauf beschränkt zu sein.

In einem ersten Schritt 31 des in Fig. 8 gezeigten Verfahrens 30 wird eine Steuereinrichtung, ohne zwingende Beschränkung hierauf z. B. die Steuereinrichtung 6 aus Fig. 5, bereitgestellt.

In einem weiteren Schritt 32 wird ein Leistungstransformator, z. B. Leistungstransformator 2 aus Fig. 5, mit wenigstens einer Transformatorwicklung bereitgestellt, die wenigstens eine Anzapfung, ohne zwingende Beschränkung hierauf z. B. wenigstens eine der Anzapfungen 3 des Leistungstransformators 2 in Fig. 5, aufweist und bereitstellt.

In einem noch weiteren Schritt 33 des Verfahrens 30 wird wenigstens ein mittels der Steuereinrichtung zur Einstellung eines Übersetzungsverhältnisses des Leistungstransformators wahlweise ein- und ausschaltbare Stufenschalter, ohne zwingende Beschränkung hierauf z. B. wenigstens einer der Stufenschalter 7 aus Fig. 5, bereitgestellt.

Weiter wird in einem Schritt 34 des beispielhaften Verfahrens 30 wenigstens eine Klemmschaltung zur Spannungsbegrenzung, ohne zwingende Beschränkung hierauf z. B. Klemmschaltung 11 aus Fig. 5, bereitgestellt.

In Schritt 35 wird ein vorbestimmter Strompfad mittels der wenigstens einen Klemmschaltung bei Überschreiten eines vorbestimmten Spannungsschwellenwerts bereitgestellt, um ein vorbestimmtes Übersetzungsverhältnis des Leistungstransformators zu bestimmen. Mit anderen Worten wird der vorbestimmte Strompfad durch Aktivieren (d. h. Kurzschließen) der Klemmschaltung infolge der Schwellenwertüberschreitung bereitgestellt und dementsprechend bestimmt.

Das hierin offenbarte Laststufenschaltermodul, die Anordnung aus einem Leistungstransformator und einem Laststufenschaltermodul sowie das Verfahren zum Betrieb eines Laststufenschaltermoduls sind nicht auf die hierin jeweils gezeigten Ausführungsformen beschränkt, sondern umfassen auch gleich wirkende weitere Ausführungsformen, die sich aus technisch sinnvollen weiteren Kombinationen der hierin beschriebenen Merkmale der jeweiligen Gegenstände ergeben. Insbesondere sind die vorstehend in der allgemeinen Beschreibung und der Figurenbeschreibung genannten und/oder in den Figuren allein gezeigten Merkmale und Merkmalskombinationen nicht nur in den jeweils hierin explizit angegebenen Kombinationen, sondern auch in anderen Kombinationen oder in Alleinstellung verwendbar, ohne den Rahmen der vorliegenden Erfindung zu verlassen.

In besonders bevorzugter Ausführung wird das erfindungsgemäße Laststufenschaltermodul, insbesondere leistungselektronische Laststufenschaltermodul, zur Einstellung eines Übersetzungsverhältnisses eines Leistungstransformators, z. B. Hochspannungstransformators, in Windkraftanlagen verwendet, wobei die Verwendung nicht zwingend auf Windkraftanlagen beschränkt ist, sondern beispielsweise ebenso Photovoltaikanlagen, Bahnstromnetze und sonstige elektrische Energienetzwerke, insbesondere Mittel- und Hochspannungsnetze, umfassen kann.

### Bezugszeichenliste:

- 1: Laststufenschaltermodul
- 2: Leistungstransformator
- 3: Wicklungsabgriff, Abgriff, Anzapfung
- 4: Oberseitiger Transformatoranschluss
- 5: Unterseitiger Transformatoranschluss
- 6: Steuereinrichtung
- 7: Stufenschalter
- 8: Erster Anschluss
- 9: Zweiter, wicklungsseitiger Anschluss
- 10: Steuersignal
- 11: Klemmschaltung
- 12: Kippdiodenstruktur
- 13: Leistungshalbleiterschalter, Thyristor
- 15: Leistungselektronisches Laststufenschaltermodul
- 16: Thyristorstapel
- 17: Isolator
- 18: Kühldose
- 20: Anordnung
- 30: Verfahren zum Betrieb eines Laststufenschaltermoduls

- BOD: Break-Over-Diodenstruktur
- HV: Hochspannung
- IGBT: Insulated Gate Bipolar Transistor
- IGCT: Integrated Gate-Commuted Thyristor
- LV: Niederspannung

## Patentansprüche

1. Laststufenschaltermodul zur Einstellung eines Übersetzungsverhältnisses eines Leistungstransformators (2) mit wenigstens zwei, jeweils wenigstens eine Anzapfung (3) bereitstellende Transformatorwicklungen, aufweisend:
- eine Steuereinrichtung (6),
- wenigstens drei mittels der Steuereinrichtung (6) zur Einstellung des Übersetzungsverhältnisses des Leistungstransformators (2) wahlweise ein- und ausschaltbare Stufenschalter (7) die über einen ersten elektrischen Anschluss (8) untereinander verbunden sind und die über einen wicklungsseitigen, zweiten elektrischen Anschluss (9) jeweils mit einer anderen der Anzapfungen (3) verbunden sind, und
- wenigstens eine Klemmschaltung (11) zur Spannungsbegrenzung, die eingerichtet ist, bei Überschreiten eines vorbestimmten Spannungsschwellenwerts einen vorbestimmten Strompfad zur Bestimmung eines vorbestimmten Übersetzungsverhältnisses des Leistungstransformators bereitzustellen, wobei die Klemmschaltung (11) an einem Ende mit einer Anzapfung (3) einer der Transformatorwicklungen und an einem anderen Ende mit einer Anzapfung (3) einer anderen der Transformatorwicklungen verbunden ist.

2. Laststufenschaltermodul nach Anspruch 1, wobei die Klemmschaltung (11) wenigstens eine Kippdiodenstruktur (12) mit einer vorbestimmten Durchbruchspannung aufweist.

3. Laststufenschaltermodul nach Anspruch 1 oder 2, wobei die Klemmschaltung (11) ein Paar antiparallel geschalteter Kippdiodenstrukturen (12) mit jeweils einer vorbestimmten Durchbruchspannung aufweist.

4. Laststufenschaltermodul nach einem der vorhergehenden Ansprüche, wobei jeder der wenigstens drei Stufenschalter (7) ein Paar antiparallel geschalteter Thyristoren (13) aufweist.

5. Laststufenschaltermodul nach dem vorhergehenden Anspruch, wobei die Thyristoren (13) lichtgesteuerte Thyristoren sind.

6. Laststufenschaltermodul nach einem der vorhergehenden Ansprüche, wobei die Klemmschaltung (11) wenigstens einen Thyristor aufweist.

7. Laststufenschaltermodul nach dem vorhergehenden Anspruch, wobei der Thyristor eine die Kippdiodenstruktur (11) ausbildende Break-Over-Diodenstruktur (BOD) aufweist.

8. Laststufenschaltermodul nach Anspruch 6 oder 7, wobei die Klemmschaltung (11) einen weiteren Schalter und eine Impedanz aufweist.

9. Laststufenschaltermodul nach einem der Ansprüche 1 bis 5, wobei die Klemmschaltung (11) wenigstens einen Insulated Gate Bipolar Transistor (IGBT) oder einen Integrated Gate-Commuted Thyristor (IGCT) aufweist.

10. Laststufenschaltermodul nach einem der vorhergehenden Ansprüche, wobei das Laststufenschaltermodul weiterhin eine mechanische Klemmvorrichtung zur Ausübung eines mechanischen Drucks auf die Klemmschaltung (11) aufweist.

11. Laststufenschaltermodul nach einem der vorhergehenden Ansprüche, wobei das Laststufenschaltermodul mehrere Klemmschaltungen (11) aufweist.

12. Laststufenschaltermodul nach dem vorhergehenden Anspruch, wobei die Anzahl der Klemmschaltungen (11) von der Anzahl der Transformatorwicklungen abhängt und proportional zu einer Anzahl an Transformatorphasen ist.

13. Anordnung aus einem Leistungstransformator (2) mit wenigstens zwei, jeweils wenigstens eine Anzapfung (3) bereitstellende Transformatorwicklungen und einem Laststufenschaltermodul (1, 15) nach einem der vorhergehenden Ansprüche zur Einstellung eines Übersetzungsverhältnisses des Leistungstransformators (2).

14. Windkraftanlage aufweisend ein Laststufenschaltermodul nach einem der Ansprüche 1 bis 12.

15. Verfahren zum Betrieb eines Laststufenschaltermodul nach einem der Ansprüche 1 bis 12, aufweisend die Schritte:
- Bereitstellen einer Steuereinrichtung (6),
- Bereitstellen eines Leistungstransformators (2) mit wenigstens zwei, jeweils wenigstens eine Anzapfung (3) bereitstellende Transformatorwicklungen,
- Bereitstellen von wenigstens drei mittels der Steuereinrichtung (6) zur Einstellung eines Übersetzungsverhältnisses des Leistungstransformators (2) wahlweise ein- und ausschaltbarer Stufenschalter (7), die über einen ersten elektrischen Anschluss (8) untereinander verbunden sind,
- Verbinden jedes der wenigstens drei Stufenschalter (7) über einen wicklungsseitigen, zweiten elektrischen Anschluss (9) jeweils mit einer anderen der Anzapfungen (3),
- Bereitstellen wenigstens einer Klemmschaltung (11) zur Spannungsbegrenzung, und
- Bereitstellen eines vorbestimmten Strompfads mittels der wenigstens einen Klemmschaltung (11) bei Überschreiten eines vorbestimmten Spannungsschwellenwerts, um ein vorbestimmtes Übersetzungsverhältnis des Leistungstransformators zu bestimmen durch Verbinden der Klemmschaltung (11) an einem Ende mit einer Anzapfung (3) einer der Transformatorwicklungen und an einem anderen Ende mit einer Anzapfung (3) einer anderen der Transformatorwicklungen.

## Claims

1. On-load tap changer module for adjusting a transformation ratio of a power transformer (2) having at least two transformer windings, each providing at least one tap (3), having:
- a control device (6),
- at least three tap changers (7), which can selectively be connected and disconnected by means of the control device (6) in order to adjust the transformation ratio of the power transformer (2), which are connected to one another via a first electrical terminal (8), and which are connected to another of the taps (3) in each case via a winding-side second electrical terminal (9), and
- at least one crowbar (11) for voltage limitation, which is configured to provide a predetermined current path when a predetermined voltage threshold value is exceeded, in order to determine a predetermined transformation ratio of the power transformer, wherein the crowbar (11) is connected to a tap (3) of one of the transformer windings at one end and to a tap (3) of another of the transformer windings at another end.

2. On-load tap changer module according to Claim 1, wherein the crowbar (11) has at least one toggle diode structure (12) having a predetermined breakdown voltage.

3. On-load tap changer module according to Claim 1 or 2, wherein the crowbar (11) has a pair of toggle diode structures (12), which are connected in anti-parallel, and which each have a predetermined breakdown voltage.

4. On-load tap changer module according to one of the preceding claims, wherein each of the at least three tap changers (7) has a pair of thyristors (13) connected in anti-parallel.

5. On-load tap changer module according to the preceding claim, wherein the thyristors (13) are light-triggered thyristors.

6. On-load tap changer module according to one of the preceding claims, wherein the crowbar (11) has at least one thyristor.

7. On-load tap changer module according to the preceding claim, wherein the thyristor has a break-over diode structure (BOD) forming the toggle diode structure (11).

8. On-load tap changer module according to Claim 6 or 7, wherein the crowbar (11) has a further switch and an impedance.

9. On-load tap changer module according to one of Claims 1 to 5, wherein the crowbar (11) has at least one insulated gate bipolar transistor (IGBT) or one integrated gate-commutated thyristor (IGCT).

10. On-load tap changer module according to one of the preceding claims, wherein the on-load tap changer module further has a mechanical clamping device for exerting a mechanical pressure on the crowbar (11).

11. On-load tap changer module according to one of the preceding claims, wherein the on-load tap changer module has a plurality of crowbars (11).

12. On-load tap changer module according to the preceding claim, wherein the number of crowbars (11) is dependent on the number of transformer windings and is proportional to a number of transformer phases.

13. Assembly consisting of a power transformer (2) having at least two transformer windings, each providing at least one tap (3), and an on-load tap changer module (1, 15) according to one of the preceding claims for adjusting a transformation ratio of the power transformer (2).

14. Wind power installation having an on-load tap changer module according to one of Claims 1 to 12.

15. Method for operating an on-load tap changer module according to one of Claims 1 to 12, having the steps of:
- providing a control device (6),
- providing a power transformer (2) having at least two transformer windings, each providing at least one tap (3),
- providing at least three tap changers (7), which can selectively be connected and disconnected by means of the control device (6) in order to adjust a transformation ratio of the power transformer (2), and which are connected to one another via a first electrical terminal (8),
- connecting each of the at least three tap changers (7) to another of the taps (3) in each case via a winding-side second electrical terminal (9),
- providing at least one crowbar (11) for voltage limitation, and
- providing a predetermined current path by means of the at least one crowbar (11) when a predetermined voltage threshold value is exceeded, in order to determine a predetermined transformation ratio of the power transformer by connecting the crowbar (11) to a tap (3) of one of the transformer windings at one end and to a tap (3) of another of the transformer windings at another end.

## Revendications

1. Module de changeur de prises en charge pour le réglage d'un rapport de transformation d'un transformateur (2) de puissance, comprenant au moins deux enroulements de transformateur donnant respectivement au moins une prise (3), comportant :
- un dispositif (6) de commande,
- au moins trois changeurs (7) de prises pouvant être branchés et débranchés au choix au moyen du dispositif (6) de commande pour le réglage du rapport de transformation du transformateur (2) de puissance, qui sont reliés entre eux par une première connexion (8) électrique et qui sont reliés respectivement à une autre des prises (3) par une deuxième connexion (9) électrique du côté de l'enroulement, et
- au moins un circuit (11) de verrouillage pour la limitation de la tension, qui est agencé pour donner, lorsqu'une valeur de seuil de tension déterminée à l'avance est dépassée, un chemin de courant déterminé à l'avance pour la détermination d'un rapport de transformation déterminé à l'avance du transformateur de puissance, dans lequel le circuit (11) de verrouillage est, à une entrée, connecté à une prise (3) de l'un des enroulements du transformateur et, à une autre extrémité, à une prise (3) d'un autre des enroulements du transformateur.

2. Module de changeur de prises en charge suivant la revendication 1, dans lequel le circuit (11) de verrouillage a au moins une structure (12) de diode Kipp ayant une tension de claquage déterminée à l'avance.

3. Module de changeur de prises en charge suivant la revendication 1 ou 2, dans lequel le circuit (11) de verrouillage a une paire de structures (12) de diodes Kipp montées de manière antiparallèle ayant chacune une tension de claquage déterminée à l'avance.

4. Module de changeur de prises en charge suivant l'une des revendications précédentes, dans lequel chacun des au moins trois changeurs (7) de prises a une paire de thyristors (13) montés de manière antiparallèle.

5. Module de changeur de prises en charge suivant la revendication précédente, dans lequel les thyristors (13) sont des thyristors commandés par la lumière.

6. Module de changeur de prises en charge suivant l'une des revendications précédentes, dans lequel le circuit (11) de verrouillage a au moins un thyristor.

7. Module de changeur de prises en charge suivant la revendication précédente, dans lequel le thyristor a une structure de diode de break-over (BOD) constituant la structure (11) de diode Kipp.

8. Module de changeur de prises en charge suivant la revendication 6 ou 7, dans lequel le circuit (11) de verrouillage a un autre changeur et une impédance.

9. Module de changeur de prises en charge suivant l'une des revendications 1 à 5, dans lequel le circuit (11) de verrouillage a au moins un Insulated Gate Bipolar Transistor (IGBT) ou un Integrated Gate-Commuted Thyristor (IGCT).

10. Module de changeur de prises en charge suivant l'une des revendications précédentes, dans lequel le module de changeur de prises en charge a, en outre, un dispositif mécanique de verrouillage pour l'application d'une pression mécanique au circuit (11) de verrouillage.

11. Module de changeur de prises en charge suivant l'une des revendications précédentes, dans lequel le module de changeur de prises en charge a plusieurs circuits (11) de verrouillage.

12. Module de changeur de prises en charge suivant la revendication précédente, dans lequel le nombre des circuits (11) de verrouillage dépend du nombre des enroulements du transformateur et est proportionnel au nombre de phases du transformateur.

13. Agencement composé d'un transformateur (2) de puissance, ayant au moins deux enroulements de transformateur, donnant respectivement au moins une prise (3), et un module (1, 15) de changeur de prises en charge suivant l'une des revendications précédentes, pour le réglage d'un rapport de transformation du transformateur (2) de puissance.

14. Eolienne comportant un module de changeur de prises en charge suivant l'une des revendications 1 à 12.

15. Procédé pour faire fonctionner un module de changeur de prises en charge suivant l'une des revendications 1 à 12, comportant les stades :
- se procurer un dispositif (6) de commande,
- se procurer un transformateur (2) de puissance ayant au moins deux enroulements de transformateur donnant respectivement au moins une prise (3),
- se procurer au moins trois changeurs (7) de prises pouvant au choix être branchés et débranchés au moyen du dispositif (6) de commande pour le réglage d'un rapport de transformation du transformateur (2) de puissance et qui sont reliés entre eux par une première connexion (8) électrique,
- connecter chacun des au moins trois changeurs (7) de prises respectivement à une autre des prises (3), par l'intermédiaire d'une deuxième connexion (9) électrique du côté de l'enroulement,
- se procurer au moins un circuit (11) de verrouillage pour la limitation de la tension, et
- mettre à disposition un chemin de courant déterminé à l'avance, au moyen du au moins un circuit (11) de verrouillage, si une valeur de seuil de tension déterminée à l'avance est dépassée, pour déterminer un rapport de transformation déterminé à l'avance de transformateur de puissance par connexion du circuit (11) de verrouillage, à une extrémité, à une prise (3) de l'un des enroulements du transformateur et, à une autre extrémité, à une prise (3) d'un autre des enroulements du transformateur.
